# EUROPEAN PATENT APPLICATION

(11) **EP 4 764 929 A1**
(43) Date of publication of application: **24.06.2026**
(21) Application number: 24861830.8
(22) Date of filing: 21.08.2024
(51) Int. Cl.: G06F 21/62, G06F 21/64, G06F 21/60, G06F 16/483, G06F 16/487, G06F 16/48, G06F 21/10

(54) **METADATA GENERATION METHOD AND ELECTRONIC DEVICE**

(30) Priority: 06.09.2023 CN 202311148567
(71) Applicant: HUAWEI TECHNOLOGIES CO., LTD., Shenzhen 518129 (CN)
(72) Inventor: ZHOU, Haibo, Shenzhen, Guangdong 518129 (CN); KANG, Xin, Shenzhen, Guangdong 518129 (CN); HU, Ziyuan, Shenzhen, Guangdong 518129 (CN); HU, Runshan, Shenzhen, Guangdong 518129 (CN); LI, Tieyan, Shenzhen, Guangdong 518129 (CN)
(74) Representative: Maiwald GmbH
(86) International application number: PCT/CN2024/113620
(87) International publication number: WO 2025/050986

(57) **Abstract**

Embodiments of this application provide a metadata generation method and an electronic device. The method includes: obtaining media content; and generating metadata of the media content, where the metadata of the media content includes first information of the media content and a privacy flag, and the privacy flag indicates that the first information of the media content is public information or non-public information. In this way, non-public information and public information in the metadata of the media content may be determined based on the privacy flag, and then corresponding use/display limitation is performed on a media asset. For example, when the metadata of the media content is displayed, only the public information is displayed. For another example, in a process of using the media content, only media content whose target information is public information in the metadata of the media content is used.

## Description

This application claims priority to Chinese Patent Application No. 202311148567.9, filed with the China National Intellectual Property Administration on September 6, 2023 and entitled "METADATA GENERATION METHOD AND ELECTRONIC DEVICE", which is incorporated herein by reference in its entirety.

### TECHNICAL FIELD

Embodiments of this application relate to the data processing field, and in particular, to a metadata generation method and an electronic device.

### BACKGROUND

With popularization of portable image shooting devices such as mobile phones and development of various simple and efficient media editing software, a threshold for people to create media content (such as an image, music, and a video) and edit the media content becomes lower. In addition, as use scenarios of the media content increase (for example, the media content is sent to another user by using various types of instant messaging software; or for another example, the media content is released on various types of social software (or transaction platforms)), people are further motivated to create/edit the media content, so that the media content develops explosively.

The media content usually further carries metadata, for example, photo shooting time, a photo shooting location, and a photo shooting author. The metadata may help a creator of the media content or a consumer of the media content better understand the media content, and may be used to prove authenticity of the media content in many scenarios. However, some metadata of the media content relates to user privacy, and setting a use condition for the media content whose metadata includes user privacy can reduce a risk of user privacy leakage to some extent. Therefore, how to determine whether the metadata of the media content includes user privacy is very important.

### SUMMARY

In view of this, this application provides a metadata generation method and an electronic device. Metadata that is of media content and that is generated according to the method includes a privacy flag. In this way, corresponding use/display restriction may be subsequently performed on a media asset based on the privacy flag included in the metadata of the media content.

According to a first aspect, an embodiment of this application provides a metadata generation method. The method includes: first obtaining media content; and then generating metadata of the media content, where the metadata of the media content includes first information of the media content and a privacy flag, and the privacy flag indicates that the first information of the media content is public information or non-public information.

In this way, privacy information (that is, non-public information) and non-privacy information (that is, public information) in the metadata of the media content may be determined based on the privacy flag, and then corresponding use/display limitation is performed on a media asset. For example, when the metadata of the media content is displayed, only the public information is displayed. For another example, in a process of using the media content, only media content whose target information is public information in the metadata of the media content is used.

For example, the first information of the media content may be information associated with the media content, for example, a generation address of the media content and generation time of the media content.

For example, this application may be applied to a creation (creation) phase of the media asset, or may be applied to an editing processing phase of the media asset. This is not limited in this application.

For example, the media content in the creation phase of the media asset may be generated by an electronic device. For example, if the media content is an image, the media content may be obtained by invoking a camera for shooting, or may be generated by using an AI model or obtained through screen capture.

For example, the media content used for editing processing in the editing processing phase of the media asset may be obtained from another electronic device.

For example, a media asset (Media Asset) may include media content (Media Content) and metadata (Metadata) of the media content. The metadata of the media content is bound to the media content (in other words, the metadata of the media content is associated with the media content). It should be noted that, in some scenarios, the media asset is also referred to as a media file.

For example, the media content may include at least one of the following: an image, a video, audio, a graphic, or a text. It should be understood that the media content may further include another type of media content. This is not limited in this application.

For example, the privacy flag may be set by a system of the electronic device, or may be customized by a user. This is not limited in this application. In the creation phase of the media asset, after the media content is obtained, a privacy flag setting interface may be displayed, and the user may set a privacy flag in the privacy flag interface. In the editing processing phase of the media asset, after the media content is obtained through editing processing, the privacy flag setting interface may also be displayed, and the user may set a privacy flag in the privacy flag interface.

For example, the privacy flag directly indicates that the first information of the media content is public information or non-public information, or may indirectly indicate that the first information of the media content is public information or non-public information.

According to the first aspect, the privacy flag indicates a privacy level of the first information of the media content, and the privacy level indicates that the first information of the media content is public information or non-public information.

In this case, the privacy flag may indirectly indicate that the third information of the media content is public information or non-public information.

In a possible manner, the privacy level may be preset (or in a process of generating the metadata of the media content) for the first information of the media content according to a second preset rule. Determining first information of media content whose privacy level is higher than a level threshold as non-public information, and determining first information of media content whose privacy level is not higher than the level threshold as public information. The second preset rule may be set by a system of the electronic device, or may be customized by the user. This is not limited in this application.

For example, the second preset rule may be: A privacy level of hard binding of the media content is L1, a privacy level of a generation manner of the media content and a privacy level of a digital content identifier of the media content are L2, a privacy level of generation time of the media content is L3, and a privacy level of a generation location of the media content, a privacy level of an author name of the media content, and a privacy level of information about a generation device of the media content are L4, where privacy levels corresponding to L1 to L4 are in ascending order.

It should be understood that the second preset rule may be specifically set based on a requirement. This is not limited in this application.

According to any one of the first aspect or the foregoing implementations of the first aspect, that the privacy level indicates that the first information of the media content is public information or non-public information includes: First information of media content whose privacy level is higher than the privacy level is public information, and first information of media content whose privacy level is lower than or equal to the privacy level is non-public information; or first information of media content whose privacy level is higher than the privacy level is non-public information, and first information of media content whose privacy level is lower than or equal to the privacy level is public information.

For example, if a value of the privacy flag is L2, when the first information of the media content whose privacy level is higher than the privacy level is non-public information, and the first information of the media content whose privacy level is lower than or equal to the privacy level is public information, the hard binding of the media content, the generation manner of the media content, and the digital content identifier of the media content in the foregoing example are public information, and the generation time of the media content, the generation location of the media content, the author name of the media content, and the information about the generation device of the media content in the foregoing example are non-public information. When the first information of the media content whose privacy level is higher than the privacy level is public information, and the first information of the media content whose privacy level is lower than or equal to the privacy level is non-public information, the hard binding of the media content, the generation manner of the media content, and the digital content identifier of the media content in the foregoing example are non-public information, the generation time of the media content, the generation location of the media content, the author name of the media content, and the information about the generation device of the media content in the foregoing example are public information.

It should be noted that, in a possible manner, the privacy flag may directly indicate that the first information of the media content is public information or non-public information. For example, the privacy flag may be represented by using h (h is a positive integer) bits, where h may be a quantity of pieces of first information of the media content. In other words, one bit in the privacy flag corresponds to one piece of first information. In a possible manner, for one bit in the privacy flag, when a value of the bit is "1", it indicates that the first information of the corresponding media content is public information; and when the value of the bit is "0", it indicates that the first information of the corresponding media content is non-public information. In a possible manner, for one bit in the privacy flag, when a value of the bit is "1", it indicates that the first information of the corresponding media content is non-public information; and when the value of the bit is "0", it indicates that the first information of the corresponding media content is public information. This is not limited in this application.

In a possible manner, public information and non-public information in the first information of the media content may be determined in advance (or in a process of generating the metadata of the media content) according to a first preset rule. The first preset rule may be set by the system of the electronic device, or may be customized by the user. This is not limited in this application.

For example, the first preset rule may be: the hard binding of the media content, the generation manner of the media content, and the digital content identifier of the media content are public information, and the generation time of the media content, the generation location of the media content, the author name of the media content, and the information about the generation device of the media content are non-public information.

It should be understood that the first preset rule may be specifically set based on a requirement. This is not limited in this application.

According to any one of the first aspect or the foregoing implementations of the first aspect, the privacy flag indicates that a part or all of the first information is public information or non-public information.

According to any one of the first aspect or the foregoing implementations of the first aspect, the first information of the media content includes second information, and the privacy flag specifically indicates that the second information is public information. In other words, the second information is the public information in the first information of the media content. In a possible case, the metadata of the media content includes the public information in the first information of the media content and the privacy flag.

For example, the second information is at least a part of the first information of the media content.

For example, a privacy level of the second information is not higher than a privacy level indicated by the privacy flag.

According to any one of the first aspect or the foregoing implementations of the first aspect, the metadata of the media content further includes fourth information, the fourth information is obtained through privacy protection processing based on third information, and the privacy flag further indicates that the third information is non-public information.

In other words, the third information is non-public information in the first information of the media content, and the third information may be information other than the second information in the first information of the media content.

In other words, the metadata of the media content includes the public information in the first information of the media content, the information obtained through privacy protection processing on the non-public information in the first information of the media content, and the privacy flag. In this way, it is convenient for the user to learn that first information on which privacy protection processing is performed in the media content.

In addition, the third information on which privacy protection processing is performed is invisible. In this way, another user cannot view or obtain the third information. This can ensure security of the third information, and avoid leakage of the third information. When the third information is the user privacy information, user privacy leakage can be avoided, and user privacy security can be ensured.

For example, a privacy level of the third information is higher than the privacy level indicated by the privacy flag.

According to any one of the first aspect or the foregoing implementations of the first aspect, there are a plurality of pieces of second information, and privacy levels of the plurality of pieces of second information are the same or different.

According to any one of the first aspect or the foregoing implementations of the first aspect, the privacy protection processing includes at least one of encryption processing or hard binding processing.

For example, the hard binding (hard binding) processing may mean that original information is processed according to a one-way function, an obtained result cannot be used to derive the original information, and other original information that is processed according to the one-way function and that obtains a same result cannot be forged. Hash calculation is a type of hard binding processing.

For example, the encryption processing may be processing original information according to an encryption algorithm and a key.

It should be understood that the privacy protection processing may further include other processing, for example, commitment processing (processing original information according to a commitment algorithm, where the commitment algorithm is a data confidentiality algorithm). This is not limited in this application.

According to any one of the first aspect or the foregoing implementations of the first aspect, the fourth information is obtained through the encryption processing on the plurality of pieces of third information by using a plurality of keys. One key is used to perform the encryption processing on at least one piece of third information.

For example, there are X1 (X1 is a positive integer) pieces of third information, and there may be X2 (X2 is a positive integer) keys, where X1 is greater than or equal to X2. When X1 is greater than X2, one key may be used to perform the encryption processing on a plurality of pieces of third information. In other words, the plurality of pieces of third information share one key. When X1 is equal to X2, one key may be used to perform the encryption processing on one piece of third information. In other words, the X1 pieces of third information correspond to different keys.

For example, the key used for encryption processing may be referred to as a first key. In other words, the fourth information is obtained through encryption processing on the plurality of pieces of third information by using the plurality of first keys.

According to any one of the first aspect or the foregoing implementations of the first aspect, the plurality of keys are obtained by processing at least a master key according to a key derivation algorithm.

For example, at least the master key and the first information of the media content may be processed according to the key derivation algorithm, to obtain the plurality of keys. For example, the key derivation algorithm may be used to process at least the master key and the hard binding of the media content, to obtain the plurality of keys.

It should be understood that the plurality of keys may alternatively be obtained by processing the master key and other information according to the key derivation algorithm. This is not limited in this application.

According to any one of the first aspect or the foregoing implementations of the first aspect, the fourth information is obtained through the hard binding processing based on a plurality of random numbers and the plurality of pieces of second information. At least one random number is used to perform the hard binding processing with at least one piece of third information.

In a possible manner, hash calculation may be performed on one piece of third information by using at least one random number, to obtain one piece of fourth information. Specifically, the at least one random number and the one piece of third information may be connected. Then, hash calculation is performed, according to a hash algorithm, on information obtained after the at least one random number and the one piece of third information are connected, to obtain the one piece of fourth information.

In a possible manner, hash calculation may be performed, by using at least one random number, on information obtained by combining a plurality of pieces of third information, to obtain one piece of fourth information. Specifically, the at least one random number and the plurality of pieces of third information may be connected. Then, hash calculation is performed, according to a hash algorithm, on information obtained after the at least one random number and the plurality of pieces of third information are connected, to obtain the one piece of fourth information.

After hard binding processing is performed on the third information whose value is simple, the value of the third information may be reversely derived by looking up a table. Therefore, in this application, hard binding processing is performed after the value of the third information is connected to the random number, so that the value of the third information can be prevented from being reversely derived, and the value of the third information can be prevented from being disclosed.

According to any one of the first aspect or the foregoing implementations of the first aspect, there are the plurality of pieces of third information, there are a plurality of pieces of fourth information, and one piece of fourth information is obtained through the privacy protection processing based on the at least one piece of third information.

For example, privacy protection processing may be performed on one piece of third information to obtain one piece of fourth information, or privacy protection processing may be performed on information obtained by combining a plurality of pieces of third information to obtain one piece of fourth information. This is not limited in this application.

According to the first aspect or any one of the foregoing implementations of the first aspect, the metadata of the media content further includes at least one of the following: a claim or a claim signature, the claim is determined based on at least the first information of the media content, and the claim signature is a signature of the claim.

For example, the claim (Claim) may include at least one of the following: hard binding of the fourth information, hard binding of the second information, hard binding of the media content, or hard binding determined based on the fourth information, the second information, and hard binding of the media content. It should be understood that the claim may further include other information. This is not limited in this application.

For example, the claim may be signed according to a claim signature algorithm, to obtain the claim signature (Claim Signature) of the claim. It should be understood that the claim signature algorithm is not limited in this application.

According to any one of the first aspect or the foregoing implementations of the first aspect, the first information of the media content includes at least one of the following: generation time of the media content, an author name of the media content, a digital content identifier of the media content, a generation location of the media content, information about a media content generation device of the media content, a generation manner of the media content, a resolution of the media content, a size of the media content, a media type of the media content, hard binding of the media content, copyright information of the media content, a training identifier of the media content, editing operation information of the media content, editing time of the media content, an editing location of the media content, editing tool information of the media content, or information about an editing device of the media content.

For example, generation time of the media content, an author name of the media content, a digital content identifier of the media content, a generation location of the media content, information about a generation device of the media content, a generation manner of the media content, a resolution of the media content, a size of the media content, a media type of the media content, copyright information of the media content, and a training identifier of the media content may be referred to as initial information of the media content. The initial information of the media content may be information generated when the media content is generated. The initial information of the media content may further include other information. This is not limited in this application.

For example, editing operation information of the media content, editing time of the media content, an editing location of the media content, editing tool information of the media content, or information about an editing device of the media content may be referred to as editing information of the media content. The editing information of the media content may be information related to an editing processing process of the media content. It should be understood that the editing information of the media content may further include other information. This is not limited in this application.

It should be noted that the hard binding of the media content is not the third information. In other words, privacy protection processing is not performed on the hard binding of the media content in this application.

According to any one of the first aspect or the foregoing implementations of the first aspect, the method further includes: obtaining the first information of the media content and the privacy flag; determining the second information in the first information of the media content based on the privacy flag; and encapsulating at least the second information and the privacy flag, to obtain first encapsulated data.

According to any one of the first aspect or the foregoing implementations of the first aspect, the method further includes: obtaining the first information of the media content and the privacy flag; determining the second information and third information in the first information of the media content based on the privacy flag; performing the privacy protection processing on the third information, to obtain the fourth information; and encapsulating at least the second information, the privacy flag, and the fourth information, to obtain second encapsulated data.

For example, the second encapsulated data may include at least one of the following encapsulated data 1 to encapsulated data 6.

For example, in a creation phase of a media asset, the privacy flag, the second information, and the fourth information may be encapsulated to obtain encapsulated data (subsequently referred to as the encapsulated data 1 (or referred to as mandatory assertion (Mandatory Assertion))). Then, the encapsulated data 1, the claim, and the claim signature are encapsulated, to obtain the encapsulated data 2 (or referred to as a trust declaration (Trust Declaration)). Then, the encapsulated data 2 is encapsulated, to obtain the encapsulated data 3 (or referred to as a trust record (Trust Record)). It should be noted that the second information in the encapsulated data 1 or the third information used to generate the fourth information in the encapsulated data 1 may include at least one of the following: generation time of the media content, an author name of the media content, a digital content identifier of the media content, a generation location of the media content, information about a generation device of the media content, a generation manner of the media content, a resolution of the media content, a size of the media content, a media type of the media content, hard binding of the media content, copyright information of the media content, and a training identifier of the media content.

For example, in an editing processing phase of a media asset, the privacy flag, second information, and fourth information may be encapsulated to obtain the encapsulated data 4 (or referred to as assertion (Assertion)). It should be noted that the second information in the encapsulated data 4 or third information used to generate the fourth information in the encapsulated data 4 may include at least one of the following: editing operation information of the media content, editing time of the media content, an editing location of the media content, editing tool information of the media content, or information about an editing device of the media content. Then, the encapsulated data 4, the claim, and the claim signature are encapsulated, to obtain the encapsulated data 5 (or referred to as a trust manifest (Trust Manifest)). Then, the encapsulated data 2 (generated in the creation phase of the media asset) and the encapsulated data 5 may be encapsulated to obtain encapsulated data 6 (or referred to as a trust record (Trust Record)).

For example, in the process of generating the metadata of the media content, after privacy protection processing is performed on the third information to obtain the fourth information, the third information may be replaced with the fourth information, and at least the fourth information is encapsulated into the metadata of the media content.

According to a second aspect, an embodiment of this application provides a media asset display method, applied to an electronic device having a display. The method includes: receiving an operation for a media asset, where the media asset includes media content and metadata of the media content, the metadata of the media content includes first information of the media content and a privacy flag, and the privacy flag indicates that the first information of the media content is public information or non-public information; and displaying public information and the privacy flag in the first information of the media content in response to the operation for the media asset. In this way, for the media asset generated by the electronic device or a media asset obtained from another electronic device, public information and the privacy flag in the metadata of the media content can be viewed.

For example, the operation for the media asset may be a metadata viewing operation for the media asset.

According to the second aspect, the method includes: further displaying the privacy flag in response to the operation for the media asset.

According to any one of the second aspect or the foregoing implementations of the second aspect, the metadata of the media content further includes fourth information, the fourth information is obtained through privacy protection processing based on third information, and the third information is non-public information in the first information of the media content; and the method includes: further displaying the fourth information in response to the operation for the media asset. In this way, the user cannot learn of the third information in the metadata of the media content, thereby ensuring information security of the third information to some extent.

According to the second aspect or any one of the foregoing implementations of the second aspect, the metadata of the media content further includes fourth information, the fourth information includes information obtained through encryption processing on third information by using a first key, and the third information is non-public information in the first information of the media content; and the method includes: when the electronic device holds a plurality of first keys, further displaying, in response to the operation for the media asset, the third information obtained through decryption processing on the fourth information by using the first keys. In this way, the electronic device may obtain the third information through decryption processing on the fourth information by using the held first keys, and may further display the non-public information.

According to any one of the second aspect or the foregoing implementations of the second aspect, the privacy flag indicates a privacy level of the first information of the media content, and the privacy level indicates that the first information of the media content is public information or non-public information.

According to any one of the second aspect or the foregoing implementations of the second aspect, the privacy protection processing includes at least one of encryption processing or hard binding processing.

For example, a type of the second information and/or a type of the third information may be further displayed in response to the operation for the media asset.

It should be understood that which information in the metadata of the media content is displayed is not limited in this application.

Any one of the second aspect and the implementations of the second aspect corresponds to any one of the first aspect and the implementations of the first aspect. For technical effect corresponding to any one of the second aspect and the implementations of the second aspect, refer to the technical effect corresponding to any one of the first aspect and the implementations of the first aspect. Details are not described herein again.

According to a third aspect, an embodiment of this application provides a metadata generation apparatus. The apparatus includes:
an obtaining module, configured to obtain media content; and
a generation module, configured to generate metadata of the media content, where the metadata of the media content includes first information of the media content and a privacy flag, and the privacy flag indicates that the first information of the media content is public information or non-public information.

According to the third aspect, the privacy flag indicates a privacy level of the first information of the media content, and the privacy level indicates that the first information of the media content is public information or non-public information.

According to any one of the third aspect or the foregoing implementations of the third aspect, that the privacy level indicates that the first information of the media content is public information or non-public information includes: First information of media content whose privacy level is higher than the privacy level is public information, and first information of media content whose privacy level is lower than or equal to the privacy level is non-public information; or first information of media content whose privacy level is higher than the privacy level is non-public information, and first information of media content whose privacy level is lower than or equal to the privacy level is public information.

According to any one of the third aspect or the foregoing implementations of the third aspect, the privacy flag indicates that a part or all of the first information is public information or non-public information.

According to any one of the third aspect or the foregoing implementations of the third aspect, the first information of the media content includes second information, and the privacy flag specifically indicates that the second information is public information.

According to any one of the third aspect or the foregoing implementations of the third aspect, the metadata of the media content further includes fourth information, the fourth information is obtained through privacy protection processing based on third information, and the privacy flag further indicates that the third information is non-public information.

According to any one of the third aspect or the foregoing implementations of the third aspect, there are a plurality of pieces of second information, and privacy levels of the plurality of pieces of second information are the same or different.

According to any one of the third aspect or the foregoing implementations of the third aspect, the privacy protection processing includes at least one of encryption processing or hard binding processing.

According to any one of the third aspect or the foregoing implementations of the third aspect, the fourth information is obtained through the encryption processing on the plurality of pieces of third information by using a plurality of keys. One key is used to perform the encryption processing on at least one piece of third information.

According to any one of the third aspect or the foregoing implementations of the third aspect, the plurality of keys are obtained by processing at least a master key according to a key derivation algorithm.

According to any one of the third aspect or the foregoing implementations of the third aspect, the fourth information is obtained through the hard binding processing based on a plurality of random numbers and the plurality of pieces of third information. At least one random number is used to perform the hard binding processing with at least one piece of third information.

According to any one of the third aspect or the foregoing implementations of the third aspect, there are the plurality of pieces of third information, there are a plurality of pieces of fourth information, and one piece of fourth information is obtained through the privacy protection processing based on the at least one piece of third information.

According to the third aspect or any one of the foregoing implementations of the third aspect, the metadata of the media content further includes at least one of the following: a claim or a claim signature, the claim is determined based on at least the first information of the media content, and the claim signature is a signature of the claim.

According to any one of the third aspect or the foregoing implementations of the third aspect, the first information of the media content includes at least one of the following: generation time of the media content, an author name of the media content, a digital content identifier of the media content, a generation location of the media content, information about a media content generation device of the media content, a generation manner of the media content, a resolution of the media content, a size of the media content, a media type of the media content, hard binding of the media content, copyright information of the media content, a training identifier of the media content, editing operation information of the media content, editing time of the media content, an editing location of the media content, editing tool information of the media content, or information about an editing device of the media content.

According to the third aspect or any implementation of the third aspect,
the obtaining module is further configured to obtain the first information of the media content and the privacy flag; and
the apparatus further includes:
   a privacy processing module, configured to determine the second information in the first information of the media content based on the privacy flag; and
   an encapsulation module, configured to encapsulate at least the second information and the privacy flag, to obtain first encapsulated data.

According to the third aspect or any implementation of the third aspect,
the obtaining module is further configured to obtain the first information of the media content and the privacy flag; and
the apparatus further includes:
   an information determining module, configured to determine the second information and third information in the first information of the media content based on the privacy flag;
   a privacy processing module, configured to perform the privacy protection processing on the third information, to obtain the fourth information; and
   an encapsulation module, configured to encapsulate at least the second information, the privacy flag, and the fourth information, to obtain second encapsulated data.

Any one of the third aspect and the implementations of the third aspect corresponds to any one of the first aspect and the implementations of the first aspect. For technical effect corresponding to any one of the third aspect and the implementations of the third aspect, refer to technical effect corresponding to any one of the first aspect and the implementations of the first aspect. Details are not described herein again.

According to a fourth aspect, an embodiment of this application provides a media asset display apparatus. The apparatus includes:
a receiving module, configured to receive an operation for a media asset, where the media asset includes media content and metadata of the media content, the metadata of the media content includes first information of the media content and a privacy flag, and the privacy flag indicates that the first information of the media content is public information or non-public information; and
a display module, configured to display public information in the first information of the media content in response to the operation for the media asset.

According to a fourth aspect, the display module is configured to further display the privacy flag in response to the operation for the media asset.

According to any one of the fourth aspect or the foregoing implementations of the fourth aspect, the metadata of the media content further includes fourth information, the fourth information is obtained through privacy protection processing based on third information, and the third information is non-public information in the first information of the media content; and the display module is configured to further display the fourth information in response to the operation for the media asset.

According to the fourth aspect or any one of the foregoing implementations of the fourth aspect, the metadata of the media content further includes fourth information, the fourth information includes information obtained through encryption processing on third information by using a first key, and the third information is non-public information in the first information of the media content; and the display module is configured to: when the electronic device holds the first key, further display, in response to the operation for the media asset, the third information obtained through decryption processing on the fourth information by using the first key.

According to any one of the fourth aspect or the foregoing implementations of the fourth aspect, the privacy flag indicates a privacy level of the first information of the media content, and the privacy level indicates that the first information of the media content is public information or non-public information.

According to any one of the fourth aspect or the foregoing implementations of the fourth aspect, the privacy protection processing includes at least one of encryption processing or hard binding processing.

Any one of the fourth aspect and the implementations of the fourth aspect corresponds to any one of the second aspect and the implementations of the second aspect. For technical effect corresponding to any one of the fourth aspect and the implementations of the fourth aspect, refer to the technical effect corresponding to any one of the second aspect and the implementations of the second aspect. Details are not described herein again.

According to a fifth aspect, an embodiment of this application provides an electronic device, including a memory and a processor. The memory is coupled to the processor. The memory stores program instructions. When the program instructions are executed by the processor, the electronic device is enabled to perform the metadata generation method according to any one of the first aspect or the possible implementations of the first aspect.

Any one of the fifth aspect and the implementations of the fifth aspect corresponds to any one of the first aspect and the implementations of the first aspect. For technical effect corresponding to any one of the fifth aspect and the implementations of the fifth aspect, refer to technical effect corresponding to any one of the first aspect and the implementations of the first aspect. Details are not described herein again.

According to a sixth aspect, an embodiment of this application provides an electronic device, including a memory and a processor. The memory is coupled to the processor. The memory stores program instructions. When the program instructions are executed by the processor, the electronic device is enabled to perform the media asset display method according to any one of the second aspect or the possible implementations of the second aspect.

Any one of the sixth aspect and the implementations of the sixth aspect corresponds to any one of the second aspect and the implementations of the second aspect. For technical effect corresponding to any one of the sixth aspect and the implementations of the sixth aspect, refer to the technical effect corresponding to any one of the second aspect and the implementations of the second aspect. Details are not described herein again.

According to a seventh aspect, an embodiment of this application provides a chip, including one or more interface circuits and one or more processors. The interface circuit is configured to: receive a signal from a memory of an electronic device, and send the signal to the processor. The signal includes computer instructions stored in the memory. When the processor executes the computer instructions, the electronic device is enabled to perform the metadata generation method according to any one of the first aspect or the possible implementations of the first aspect.

Any one of the seventh aspect and the implementations of the seventh aspect corresponds to any one of the first aspect and the implementations of the first aspect. For technical effect corresponding to any one of the seventh aspect and the implementations of the seventh aspect, refer to technical effect corresponding to any one of the first aspect and the implementations of the first aspect. Details are not described herein again.

According to an eighth aspect, an embodiment of this application provides a chip, including one or more interface circuits and one or more processors. The one or more processors receive or send data via the one or more interface circuits. When the one or more processors execute the computer instructions, the electronic device is enabled to perform the media asset display method according to any one of the second aspect or the possible implementations of the second aspect.

Any one of the eighth aspect and the implementations of the eighth aspect corresponds to any one of the second aspect and the implementations of the second aspect. For technical effect corresponding to any one of the eighth aspect and the implementations of the eighth aspect, refer to the technical effect corresponding to any one of the second aspect and the implementations of the second aspect. Details are not described herein again.

According to a ninth aspect, an embodiment of this application provides a computer-readable storage medium. The computer-readable storage medium stores a computer program. When the computer program is run on a computer or a processor, the computer or the processor is enabled to perform the metadata generation method according to any one of the first aspect or the possible implementations of the first aspect.

Any one of the ninth aspect and the implementations of the ninth aspect corresponds to any one of the first aspect and the implementations of the first aspect. For technical effect corresponding to any one of the ninth aspect and the implementations of the ninth aspect, refer to technical effect corresponding to any one of the first aspect and the implementations of the first aspect. Details are not described herein again.

According to a tenth aspect, an embodiment of this application provides a computer-readable storage medium. The computer-readable storage medium stores a computer program. When the computer program is run on a computer or a processor, the computer or the processor is enabled to perform the media asset display method according to any one of the fourth aspect or the possible implementations of the fourth aspect.

Any one of the tenth aspect and the implementations of the tenth aspect corresponds to any one of the second aspect and the implementations of the second aspect. For technical effect corresponding to any one of the tenth aspect and the implementations of the tenth aspect, refer to the technical effect corresponding to any one of the second aspect and the implementations of the second aspect. Details are not described herein again.

According to an eleventh aspect, an embodiment of this application provides a computer program product. The computer program product includes computer instructions. When the computer instructions are executed by a computer or a processor, the computer or the processor is enabled to perform the metadata generation method according to any one of the first aspect or the possible implementations of the first aspect.

Any one of the eleventh aspect and the implementations of the eleventh aspect corresponds to any one of the first aspect and the implementations of the first aspect. For technical effect corresponding to any one of the eleventh aspect and the implementations of the eleventh aspect, refer to the technical effect corresponding to any one of the first aspect and the implementations of the first aspect. Details are not described herein again.

According to a twelfth aspect, an embodiment of this application provides a computer program product. The computer program product includes computer instructions. When the computer instructions are executed by a computer or a processor, the computer or the processor is enabled to perform the coding method according to any one of the second aspect or the possible implementations of the second aspect.

Any one of the twelfth aspect and the implementations of the twelfth aspect corresponds to any one of the second aspect and the implementations of the second aspect. For technical effect corresponding to any one of the twelfth aspect and the implementations of the twelfth aspect, refer to the technical effect corresponding to any one of the second aspect and the implementations of the second aspect. Details are not described herein again.

### BRIEF DESCRIPTION OF DRAWINGS

FIG. 1A-1 and FIG. 1A-2 are a diagram of an example of an application scenario;
FIG. 1B-1 and FIG. 1B-2 are a diagram of an example of an application scenario;
FIG. 1C is a diagram of an example of an application scenario;
FIG. 1D-1 and FIG. 1D-2 are a diagram of an example of an application scenario;
FIG. 1E-1 to FIG. 1E-4 are a diagram of an example of an application scenario;

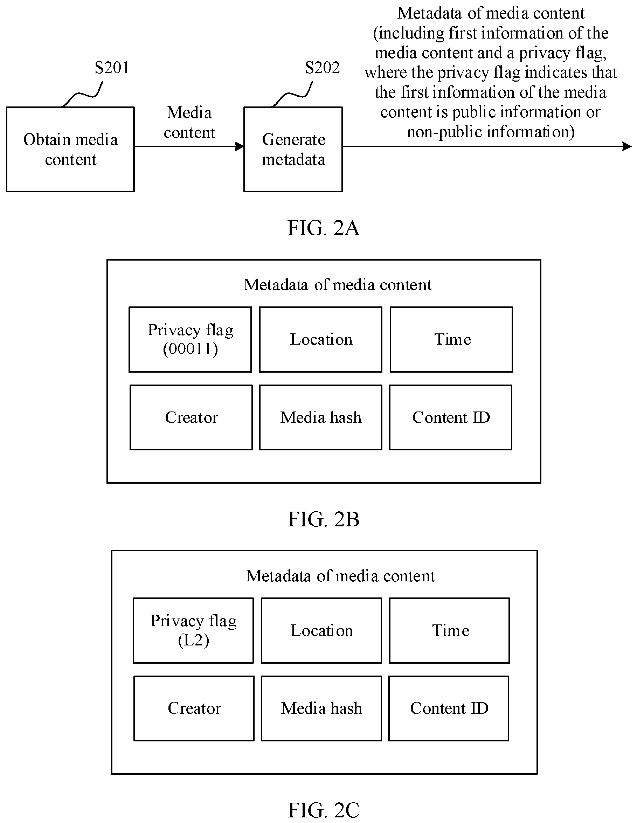

FIG. 2A is a diagram of an example of a metadata generation process;
FIG. 2B is a diagram of an example of a structure of metadata;
FIG. 2C is a diagram of an example of a structure of metadata;

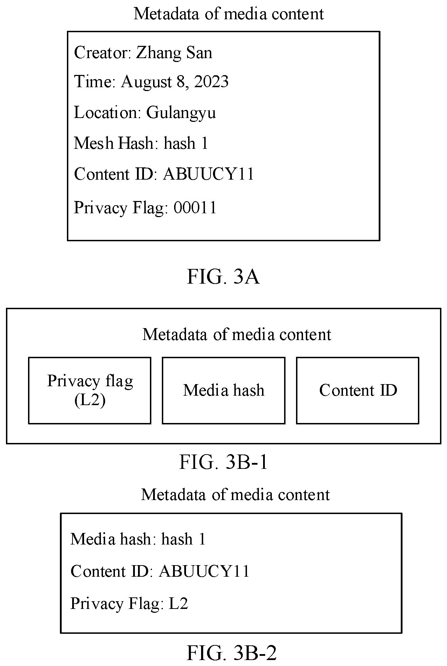

FIG. 3A is a diagram of an example of a visual representation of metadata;
FIG. 3B-1 and FIG. 3B-2 are a diagram of an example of metadata;
FIG. 3C-1 and FIG. 3C-2 are a diagram of an example of metadata;

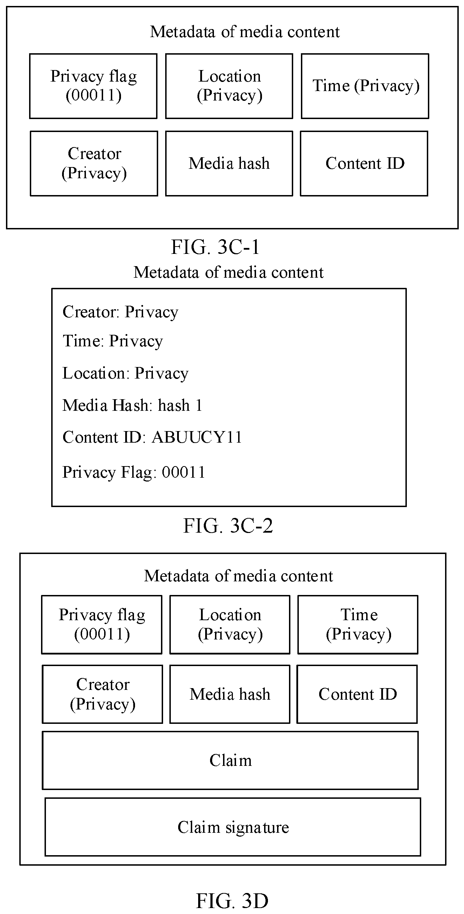

FIG. 3D is a diagram of an example of a structure of metadata of media content;

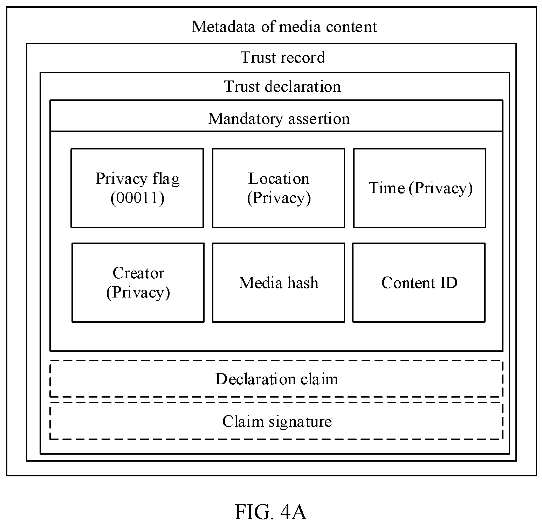

FIG. 4A is a diagram of an example of a structure of metadata;

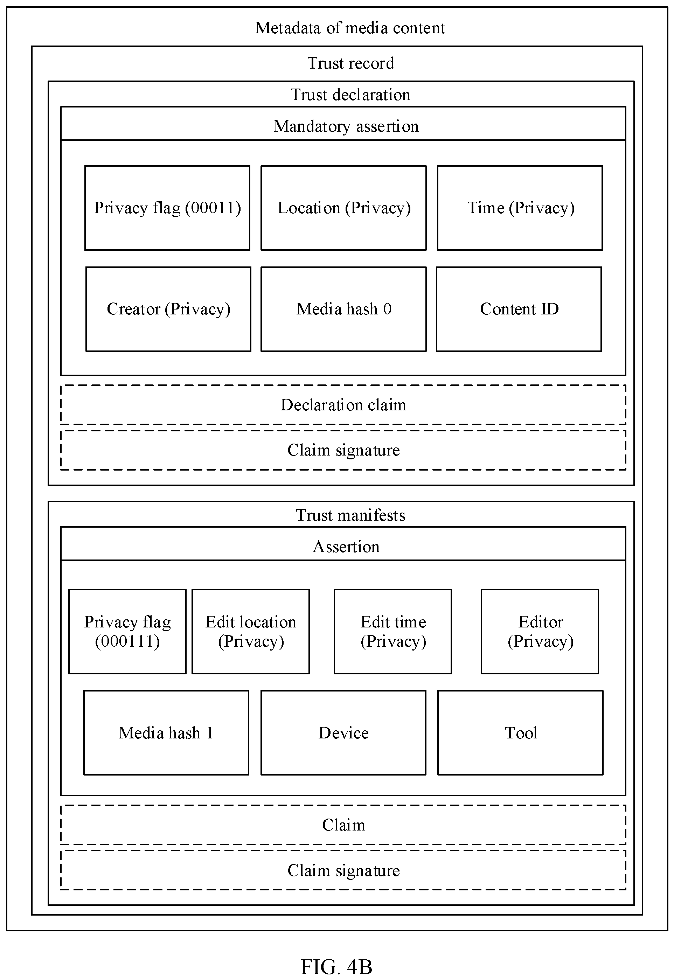

FIG. 4B is a diagram of an example of a structure of metadata;

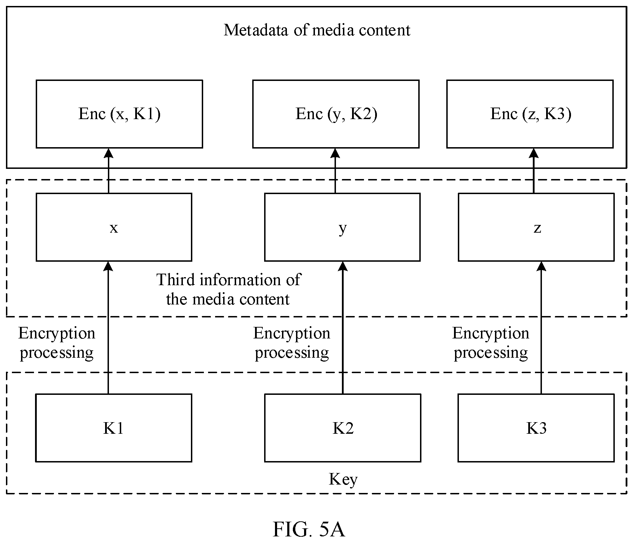

FIG. 5A is a diagram of an example of an encryption processing process;

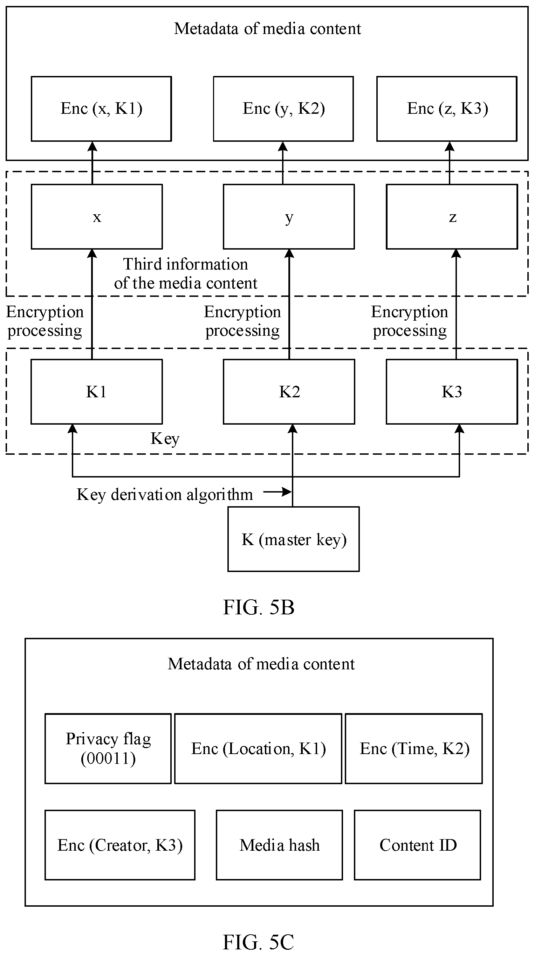

FIG. 5B is a diagram of an example of an encryption processing process;
FIG. 5C is a diagram of an example of a structure of metadata;

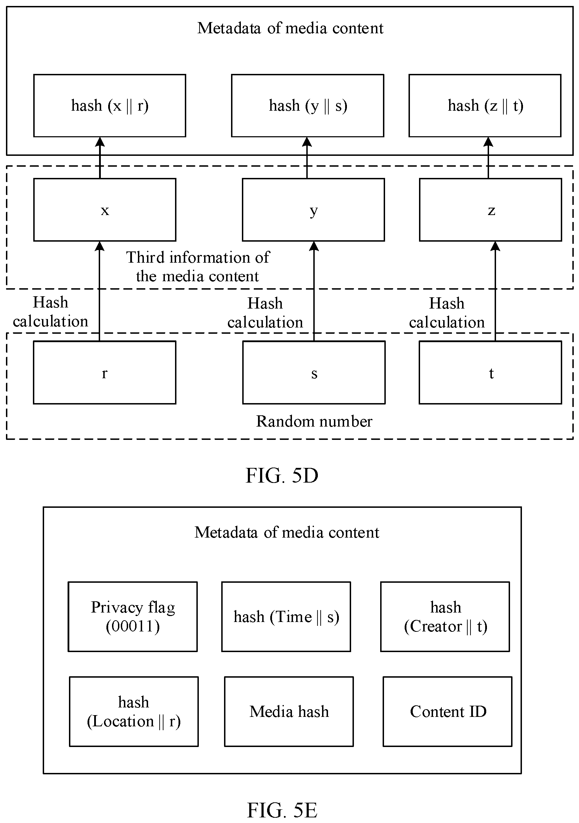

FIG. 5D is a diagram of an example of a hash calculation process;
FIG. 5E is a diagram of an example of a structure of metadata;

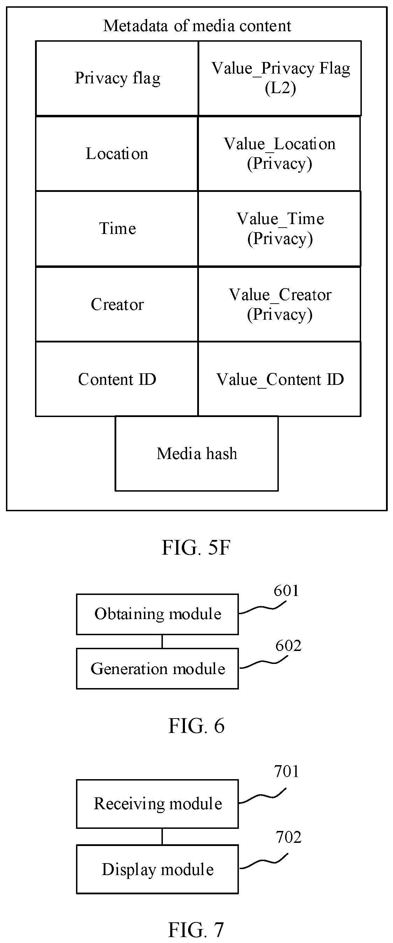

FIG. 5F is a diagram of an example of a structure of metadata;
FIG. 6 is a diagram of an example of a metadata generation apparatus;
FIG. 7 is a diagram of an example of a media asset display apparatus; and

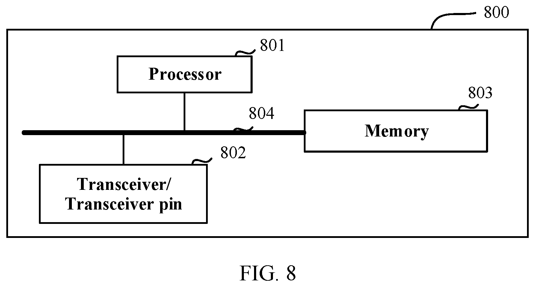

FIG. 8 is a diagram of an example of a structure of an apparatus.

### DESCRIPTION OF EMBODIMENTS

The following clearly and completely describes the technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, the terms "first", "second", and the like are intended to distinguish between different objects but do not describe a particular order of the objects. For example, a first target object, and a second target object are used to distinguish between different target objects, but are not used to describe a particular order of the target objects.

In embodiments of this application, the word "example", "for example", or the like is used to give an example, an illustration, or a description. Any embodiment or design scheme described as "example" or "for example" in embodiments of this application should not be explained as being more preferred or having more advantages than another embodiment or design scheme. Exactly, use of the term "example", "for example", or the like is intended to present a relative concept in a specific manner.

In descriptions of embodiments of this application, unless otherwise stated, "a plurality of" means two or more than two. For example, a plurality of processing units mean two or more processing units, and a plurality of systems mean two or more systems.

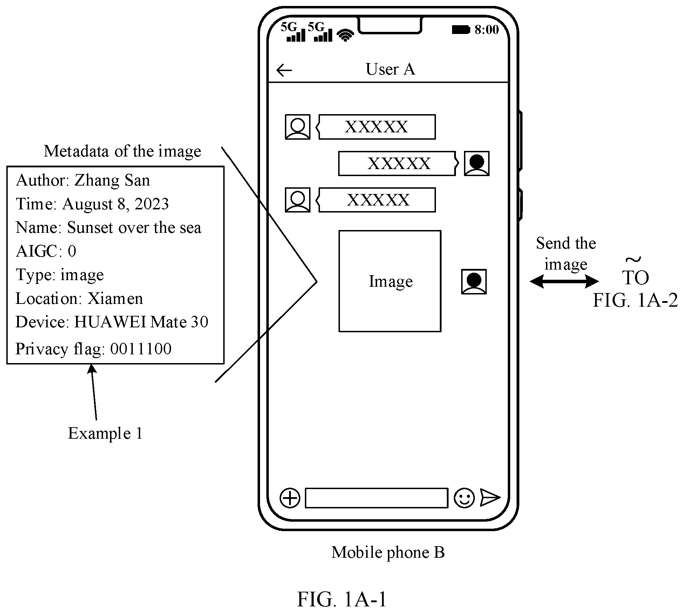

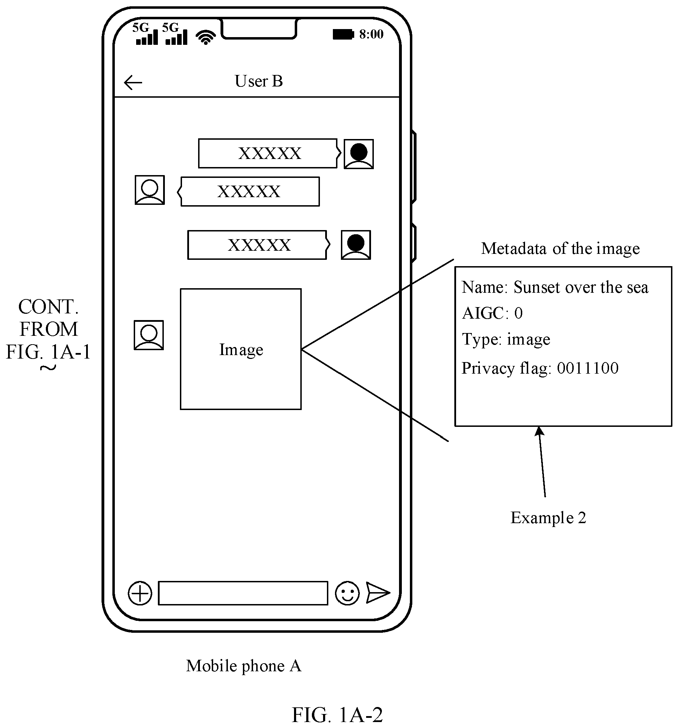

FIG. 1A-1 and FIG. 1A-2 are a diagram of an example of an application scenario. FIG. 1A-1 and FIG. 1A-2 show a scenario of sharing media content.

For example, media content (Media Content) may also be referred to as digital content (Digital content). The media content may be a part of media assets, and represents actual content of media. The digital content is content that is of different content types such as a text, an image, and a sound and that exists in a digital form, and may be stored on digital carriers such as optical discs and hard disk drives and transmitted through a network. The digital content is the entirety of products or services that integrate and use content such as an image, a text, an audio, and a video by using digital technologies, and is a product of combining digital media technologies and cultural creativity. For example, the media content may be pixel data of an image, and any additional technical metadata (for example, color configuration profiles or coding parameters) required to understand or present the content.

For example, a digital technology (Digital Technology) is a science and technology that develops alongside electronic computers, and is a technology that uses specific devices to convert various information, including images, texts, audios, videos, and the like, into binary digits "0" and "1" that can be identified by the electronic computers for computing, processing, storage, transmission, dissemination, and restoration. Because processes such as computing and storage need to use the computers for encoding, compression, decoding, and the like of information, the digital technology is also referred to as a digital tech, a computer digital technology, and the like. The digital technology is also referred to as a digital control technology.

For example, media content (Media Content) and metadata (Metadata) of the media content may form a media asset (Media Asset). The metadata of the media content is bound to the media content (in other words, the metadata of the media content is associated with the media content). It should be noted that, in some scenarios, the media asset is also referred to as a media file.

For example, the metadata (Metadata) may include data used to describe media content. For example, the metadata may include information that describes a property (property) of the media content. For example, the metadata may be a trust record (Trust Record). For example, the trust record of the media content may be a type of metadata of the media content. The trust record records related information of generation and change (for example, editing processing) of the media content, and may be used for source tracing of the media content.

For example, the metadata of the media content may be generated based on the media content and first information of the media content.

For example, the first information of the media content may be information associated with the media content, and the first information of the media content may include but is not limited to: initial information of the media content, hard binding of the media content, and editing information of the media content. It should be understood that the first information of the media content may further include other information. This is not limited in this application.

For example, the initial information of the media content may be information generated when the media content is generated. For example, the initial information of the media content may include but is not limited to: generation time of the media content, an author name of the media content, a digital content identifier of the media content, a generation location of the media content, information about a generation device of the media content, a generation manner of the media content, a resolution of the media content, a size of the media content, a media type of the media content, hard binding of the media content, copyright information of the media content, and a training identifier of the media content. It should be understood that the initial information of the media content may further include other information. This is not limited in this application.

For example, the editing information of the media content may be information related to an editing processing process of the media content. For example, the editing information of the media content may include but is not limited to: editing operation information of the media content, editing time of the media content, an editing location of the media content, editing tool information of the media content, or information about an editing device of the media content. It should be understood that the editing information of the media content may further include other information. This is not limited in this application.

For example, hard binding of the media content may be information obtained through hard binding processing on the media content. The hard binding (hard binding) processing may mean that original information is processed according to a one-way function, an obtained result cannot be used to derive the original information, and other original information that is processed according to the one-way function and that obtains a same result cannot be forged. Hash calculation is a type of hard binding processing. In other words, the hard binding of the media content may be a hash value obtained through hash calculation based on the media content (the hard binding of the media content may also be referred to as a hash value of the media content).

Refer to FIG. 1A-1 and FIG. 1A-2. For example, after a user B uses a mobile phone B to generate an image (for example, the image is obtained by invoking a camera for shooting; for another example, the image is generated by using an AI model; or for another example, the image is obtained through screen capture), the mobile phone B may obtain first information of the image. Then, the mobile phone B may generate metadata of the image based on the first information of the image and the generated image, to obtain a media asset (this process corresponds to a creation (Creation) phase of the media asset). In the embodiment of FIG. 1A-1 and FIG. 1A-2, the metadata of the image may include hard binding of the image and initial information of the image.

For example, some information in the first information of the image may be private information for the user B (that is, information that the user B does not want to disclose, which may also be referred to as non-public information). Therefore, in a process of generating the metadata of the image, the mobile phone B may add a privacy flag to the metadata of the image. The privacy flag may indicate that the first information included in the metadata of the image is public information or non-public information.

For example, a visual representation of the metadata of the image generated by the mobile phone B may be shown in Example 1 in FIG. 1A-1 and FIG. 1A-2. It should be noted that the metadata of the image shown in Example 1 in FIG. 1A-1 and FIG. 1A-2 is a visual representation manner of the metadata of the image. It should be understood that the metadata of the image may alternatively be represented in another visual representation manner. This is not limited in this application.

Refer toFIG. 1A-1 and FIG. 1A-2. For example, the metadata of the image in Example 1 may include seven pieces of first information of the image, the privacy flag may be represented by using seven bits, and one bit may correspond to one piece of first information. For example, a 1^{st} bit from left to right in the privacy flag corresponds to an author name of the image, a 2^{nd} bit from left to right in the privacy flag corresponds to generation time of the image, .... The rest can be deduced by analogy. InFIG. 1A-1 and FIG. 1A-2, if a bit in the privacy flag is "0", it indicates that corresponding first information is non-public information, and if a bit is "1", it indicates that corresponding first information is public information. In other words, in FIG. 1A-1 and FIG. 1A-2, the author name of the image, the generation time of the image, the generation location of the image, and the information about the generation device of the image are non-public information, and the name of the image, the media type of the image, and the generation manner of the image are public information.

For example, subsequently, when the user B wants to share the image with a user A, the user B may send the image to a mobile phone A of the user A by using communication software in the mobile phone B (the metadata of the image is also sent to the mobile phone A accordingly). For example, after the mobile phone A receives the image (also receives the metadata of the image), when the user A wants to view the metadata of the image, the user A may perform a metadata viewing operation. In this way, the mobile phone A may display the metadata of the image in response to the metadata viewing operation, as shown in Example 2 in FIG. 1A-1 and FIG. 1A-2. It should be noted that, when reading the metadata of the image in response to the metadata viewing operation, the mobile phone A may first read the privacy flag, and then determine, based on the privacy flag, first information to be read from the metadata of the image. For example, in FIG. 1A-1and FIG. 1A-2, if the privacy flag is "0011100", it is determined that the name of the image, the media type of the image, and the generation manner of the image are public information. In this case, only the name of the image, the media type of the image, and the generation manner of the image are read and displayed.

In this way, the user A cannot obtain the non-public information of the user B, so that leakage of the private information of the user B can be avoided, and security of the private information of the user B can be ensured to some extent.

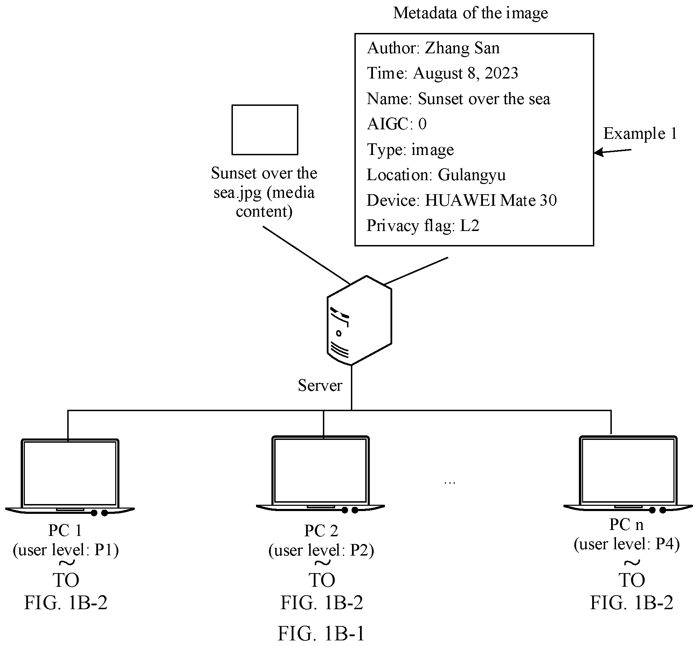

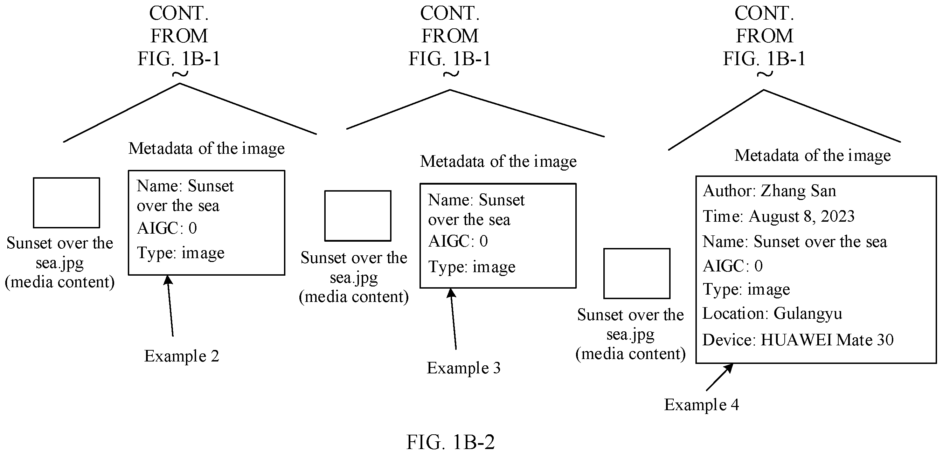

FIG. 1B-1 and FIG. 1B-2 are a diagram of an example of an application scenario. FIG. 1B-1 and FIG. 1B-2show a scenario of viewing media content based on a user level and a privacy flag.

Refer toFIG. 1B-1 and FIG. 1B-2. For example, a server stores a media asset, and the media asset includes an image and metadata of the image, as shown in Example 1 inFIG. 1B-1and FIG. 1B-2. The metadata of the image may be generated in a creation (Creation) phase of the media asset. In Example 1 in FIG. 1B-1and FIG. 1B-2, the metadata of the image may include initial information of media content and a privacy flag. The privacy flag may indicate a privacy level (for example, L2) of first information of the image, initial information whose privacy level is not higher than the privacy level indicated by the privacy flag is public information, and initial information whose privacy level is higher than the privacy level indicated by the privacy flag is non-public information.

For example, the privacy level may be preset for the first information of the media content according to a preset rule. The preset rule may be set by a system of the electronic device, or may be customized by the user. This is not limited in this application.

For example, the preset rule may be: A privacy level of hard binding of the media content is L1, a privacy level of a generation manner of the media content and a privacy level of a digital content identifier of the media content are L2, a privacy level of generation time of the media content is L3, and a privacy level of a generation location of the media content, a privacy level of an author name of the media content, and a privacy level of information about a generation device of the media content are L4, where privacy levels corresponding to L1 to L4 are in ascending order.

When the privacy level indicated by the privacy flag is L1, it may be determined that the hard binding of the media content is public information, and the generation manner of the media content, the digital content identifier of the media content, the generation time of the media content, the generation location of the media content, the author name of the media content, and the information about the generation device of the media content are non-public information.

When the privacy level indicated by the privacy flag is L2, it may be determined that the hard binding of the media content, the generation manner of the media content, and the digital content identifier of the media content are public information, and the generation time of the media content, the generation location of the media content, the author name of the media content, and the information about the generation device of the media content are non-public information.

When the privacy level indicated by the privacy flag is L3, it may be determined that the hard binding of the media content, the generation manner of the media content, the digital content identifier of the media content, and the generation time of the media content are public information, and the generation location of the media content, the author name of the media content, and the information about the generation device of the media content are non-public information.

In Example 1 in FIG. 1B-1 and FIG. 1B-2, if the privacy level indicated by the privacy flag is L2, the author name of the image, the generation time of the image, the generation location of the image, and the name of the generation device of the image are non-public information, and the name of the image, the media type of the image, and the generation manner of the image are public information.

For example, inFIG. 1B-1 and FIG. 1B-2, user levels corresponding to P1 to P4 are in ascending order. For a user whose user level is less than or equal to P2, initial information whose privacy level is less than or equal to L2 may be read from the metadata of the image. For example, after a user 1 whose user level is P1 obtains the image from the server via a PC 1, metadata that may be viewed includes the name of the image, the generation manner of the image, and the media type of the image, which may be shown in Example 2 in FIG. 1B-1 and FIG. 1B-2. For another example, after a user 2 whose user level is P2 obtains the image from the server via a PC 2, metadata that may be viewed includes the name of the image, the generation manner of the image, and the media type of the image, which may be shown in Example 3 in FIG. 1B-1 and FIG. 1B-2.

For example, in FIG. 1B-1 and FIG. 1B-2, for a user whose user level is greater than P2, initial information whose privacy level is greater than L2 may be read from the metadata of the image. For example, after a user n (n is a positive integer) whose user level is P4 obtains the image from the server via a PC n, metadata that can be viewed includes the name of the image, the generation manner of the image, the media type of the image, the author name of the image, the generation time of the image, the generation location of the image, and the information about the generation device of the image, which may be shown in Example 4 in FIG. 1B-1andFIG. 1B-2.

It should be noted that the metadata of the image shown in Example 1 to Example 4 in FIG. 1B-1 and FIG. 1B-2 is a visual representation manner of the metadata of the image. It should be understood that the metadata of the image may alternatively be represented in another visual representation manner. This is not limited in this application.

In other words, for a user whose user level is not higher than a preset threshold, only the first information whose privacy level is not higher than the privacy level indicated by the privacy flag can be read from the metadata of the image; and for a user whose user level is higher than the preset threshold, the first information whose privacy level is not higher than the privacy level indicated by the privacy flag and the first information whose privacy level is higher than the privacy level indicated by the privacy flag may be read from the metadata of the image.

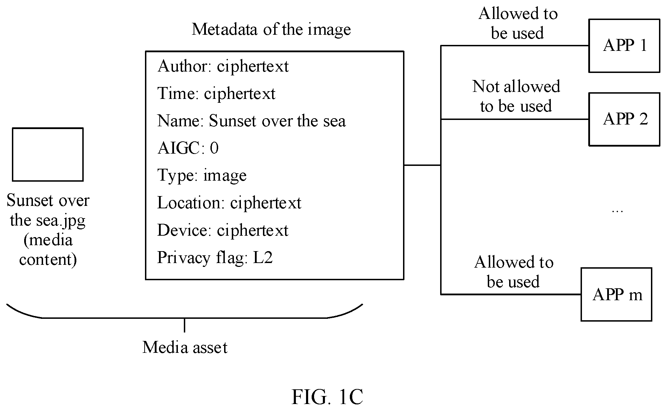

FIG. 1C is a diagram of an example of an application scenario. FIG. 1C shows a scenario of using media content based on a privacy flag.

For example, in FIG. 1C, in a process of generating metadata of an image, privacy protection processing is performed on first information (that is, non-public information) whose privacy level is higher than a privacy level indicated by the privacy flag in initial information of the media content. In this way, the non-public information in the first information of the image is invisible.

Refer to FIG. 1C. For example, some information in the metadata of the image is ciphertext (or some information is ciphertext of non-public information in the first information of the media content, where the ciphertext may be represented in a plurality of forms, for example, a character string including at least one of a digit, a letter, or a symbol), and some information is plaintext (in other words, some information is public information in the first information of the media content). For example, an author name of an image is ciphertext, generation time of the image is ciphertext, an AIGC identifier (a generation manner of the image) is ciphertext, a generation location of the image is ciphertext, and a name of a generation device of the image is ciphertext; and a name of the image is plaintext, and a media type of the image is plaintext. The non-public information in ciphertext is invisible.

For example, in FIG. 1C, when a user uses the image in an application (Application, APP), the application may read the privacy flag in the metadata of the image. When a value of the privacy flag meets a use condition of the media content, the user may be allowed to use the image; and when the value of the privacy flag does not meet the use condition, the user may not be allowed to use the image. After the APP uses the image, because privacy protection processing is performed on the non-public information in the metadata of the image, the APP can be prevented from obtaining the non-public information, thereby ensuring security of the non-public information.

For example, the APP may preset a use condition of the media content; for example, the media content whose privacy flag is L2 in the metadata is not allowed to be used; for another example, the media content whose privacy flag is L2 in the metadata is allowed to be used; for another example, media content whose value of a 7^{th} bit in the privacy flag is "0" is not allowed to be used; for another example, media content whose value of a 6^{th} bit in the privacy flag is "1" is allowed to be used; and the like. This may be specifically set based on a requirement. This is not limited in this application.

Refer to FIG. 1C. For example, a use condition of media content of an APP 1 (for example, an instant messaging APP) and an APP m (for example, a social APP) may be that media content whose privacy flag is L2 in metadata is allowed to be used. In this way, the user can use the image in the APP 1 and the APP m. In FIG. 1C, a use condition of media content of an APP 2 (for example, an encyclopedia APP) may be that media content whose privacy flag is L2 in metadata is not allowed to be used. In this way, the user cannot use the image in the APP 2.

FIG. 1D-1 and FIG. 1D-2 and FIG. 1E-1 to FIG. 1E-4 each are a diagram of an example of an application scenario. FIG. 1D-1 and FIG. 1D-2 and FIG. 1E-1 to FIG. 1E-4 each show a display scenario of a media asset.

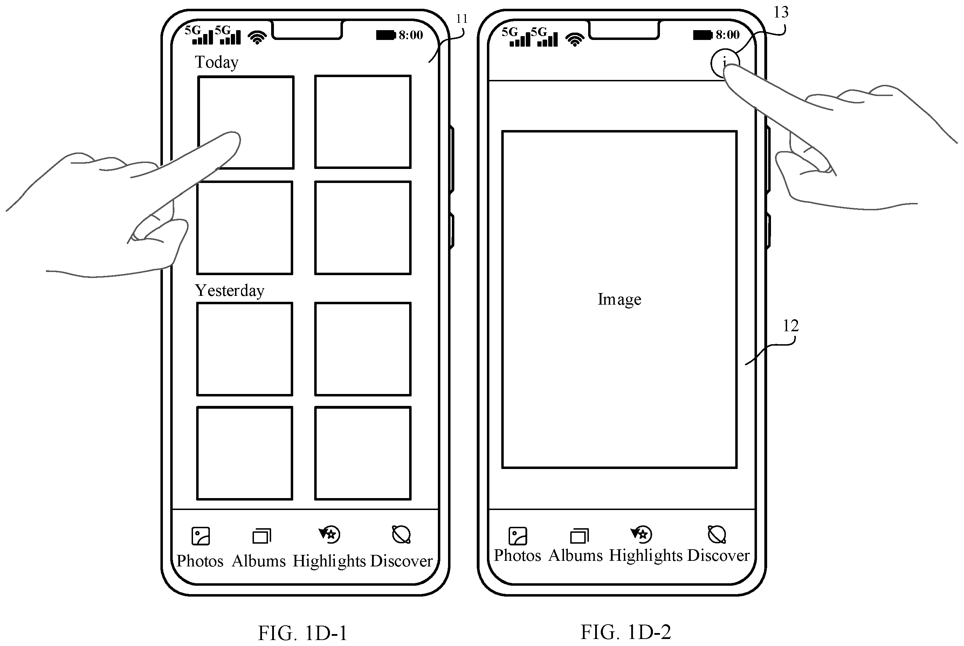

Refer to FIG. 1D-1. For example, after a mobile phone locally stores an image (or a generated image) received from another electronic device, when a user wants to view the image or metadata of the image, the user may open an album interface 11. The album interface 11 may include one or more controls, and may include but is not limited to a thumbnail of an image, a thumbnail of a video, time, and the like. This is not limited in this application. The user may tap, in the album interface 11, an image that the user wants to view, and the mobile phone may display the image in a display interface 12 in response to an operation behavior of the user, as shown in FIG. 1D-2. The display interface 12 may include one or more controls, and may include but is not limited to an image, a metadata viewing option 13, and the like. This is not limited in this application.

Still refer to FIG. 1D-2. For example, when the user wants to view the metadata of the image, the user may tap the metadata viewing option 13. The mobile phone displays the metadata of the image in response to an operation behavior of the user, as shown in FIG. 1E-1 to FIG. 1E-4.

It is assumed that the metadata of the image includes information (subsequently referred to as second information) on which privacy protection processing is not performed in the first information of the image, information (information obtained through privacy protection processing on the third information is referred to as fourth information) on which privacy protection processing is performed based on the third information (information on which privacy protection processing is performed is subsequently referred to as third information), and a privacy flag. In this case, the metadata of the image displayed in FIG. 1E-1 to FIG. 1E-4 may include a plurality of cases. The second information may include a name of the image and a type of media content, and the third information may include an author name of the image, generation time of the image, a generation manner of the image, a generation location of the image, and information about a generation device of the image.

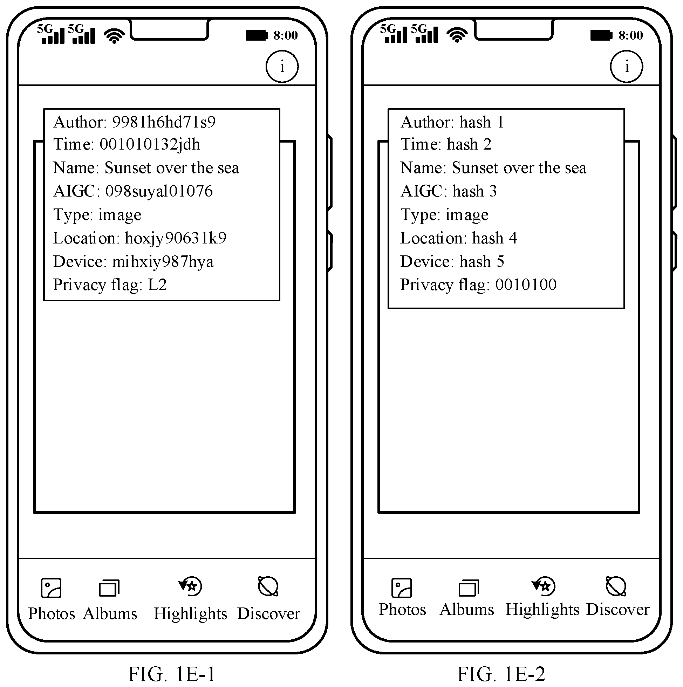

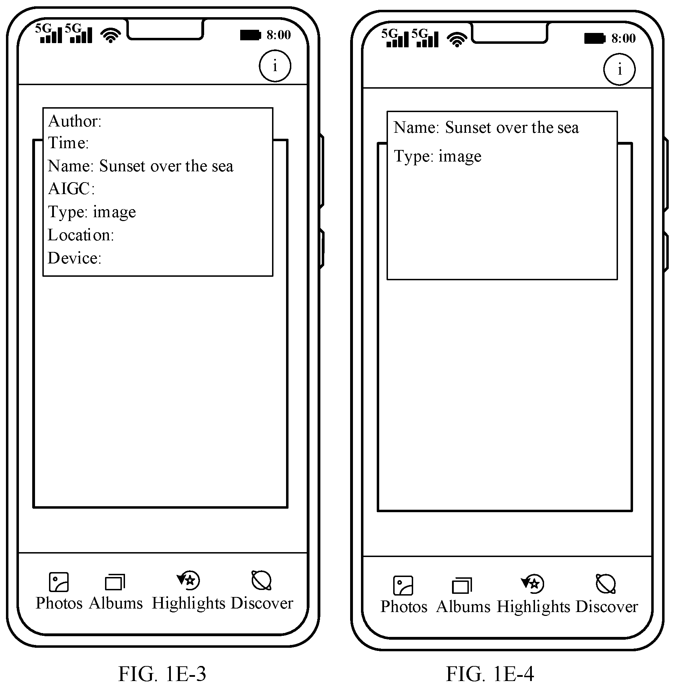

In a possible manner, a value of the second information, a type of the second information, ciphertext obtained through encryption processing on the third information, a type of the third information, and a privacy flag are displayed. Refer to FIG. 1E-1. For example, a name of an image (which may be understood as a type of the second information), a value of the name of the image (that is, sunset over the sea), a type of media content (which may be understood as a type of the second information), and a value (that is, an image) of the type of the media content are displayed; an author name of the image (which may be understood as a type of the third information), ciphertext (that is, 9981h6hd71s9) of a value of the author name of the image, generation time of the image (which may be understood as a type of the third information), ciphertext (that is, 001010132jdh) of a value of the generation time of the image, a generation manner of the image (which may be understood as a type of the third information), ciphertext (that is, 098suyal01076) of a value of the generation manner of the image, a generation location of the image (which may be understood as a type of third information), ciphertext (that is, hoxjy90631k9) of a value of the generation location of the image, information about a generation device of the image (which may be understood as a type of third information), and ciphertext (that is, mihxiy987hya) of a value of the information about the generation device of the image are displayed; and a display privacy flag (which may be understood as an information type) and a value (L2) of the privacy flag are displayed.

In a possible manner, a value of the second information, a type of the second information, a hash value obtained through hash calculation on the third information, a type of the third information, and a privacy flag are displayed. Refer to FIG. 1E-2. For example, a name of an image (which may be understood as a type of the second information), a value of the name of the image (that is, sunset over the sea), a type of media content (which may be understood as a type of the second information), and a value (that is, an image) of the type of the media content are displayed; an author name of the image (which may be understood as a type of the third information), a hash value (that is, hash 1) of a value of the author name of the image, generation time of the image (which may be understood as a type of the third information), a hash value (that is, hash 2) of a value of the generation time of the image, a generation manner of the image (which may be understood as a type of the third information), a hash value (that is, hash 3) of a value of the generation manner of the image, a generation location of the image (which may be understood as a type of third information), a hash value (that is, hash 4) of a value of the generation location of the image, information about a generation device of the image (which may be understood as a type of third information), and a hash value (that is, hash 5) of a value of the information about the generation device of the image are displayed; and a privacy flag (which may be understood as an information type) and a value (0010100) of the privacy flag are displayed.

In a possible manner, a value of the second information, a type of the second information, and a type of the third information are displayed. Refer to FIG. 1E-3. For example, a name of an image (which may be understood as a type of the second information), a value of the name of the image (that is, sunset over the sea), a type of media content (which may be understood as a type of the second information), and a value (that is, an image) of the type of the media content are displayed; and an author name of the image (which may be understood as a type of the third information), generation time of the image (which may be understood as a type of the third information), a generation manner of the image (which may be understood as a type of the third information), a generation location of the image (which may be understood as a type of third information), and information about a generation device of the image (which may be understood as a type of third information) are displayed.

In a possible manner, only the type of the second information and the value of the second information are displayed, and the type of the third information and the information obtained through privacy protection processing on the value of the third information are not displayed. Refer to FIG. 1E-4. For example, a name of an image (which may be understood as a type of the second information), a value of the name of the image (that is, sunset over the sea), a type of media content (which may be understood as a type of the second information), and a value (that is, an image) of the type of the media content are displayed.

It should be understood that, in a possible manner, the value of the second information, the type of the second information, and ciphertext obtained through encryption processing on the third information are displayed. In a possible manner, the value of the second information, the type of the second information, and a hash value obtained through hash calculation on the third information are displayed. In a possible manner, the value of the second information, the type of the second information, a type of the third information, and a privacy flag are displayed. In a possible manner, only the value of the second information, the type of the second information, and the privacy flag are displayed, and the type of the third information and the information obtained through privacy protection processing on the value of the third information are not displayed. It should be understood that which information in the metadata of the media content is displayed is not limited in this application.

The following describes a process of generating the metadata of the media asset.

FIG. 2A is a diagram of an example of a metadata generation process.

S201: Obtain media content.

For example, the media content may include at least one of the following: an image, a video, audio, a graphic, or a text. It should be understood that the media content may further include another type of media content. This is not limited in this application.

For example, this application may be applied to a creation (creation) phase of the media asset, or may be applied to an editing processing phase of the media asset. This is not limited in this application.

For example, the media content in the creation phase of the media asset may be generated by an electronic device. For example, if the media content is an image, the media content may be obtained by invoking a camera for shooting, or may be generated by using an AI model or obtained through screen capture.

For example, the media content used for editing processing in the editing processing phase of the media asset may be obtained from another electronic device.

S202: Generate metadata of the media content, where the metadata of the media content includes first information of the media content and a privacy flag, and the privacy flag indicates that the first information of the media content is public information or non-public information.

For example, the first information of the media content and the privacy flag may be further obtained. Then, the metadata of the media content may be generated based on the first information of the media content and the privacy flag.

For example, in the creation phase of the media asset, the obtained first information of the media content may include hard binding between initial information and the generated media content.

For example, in the editing processing phase of the media asset, the obtained first information of the media content may include hard binding between editing information and the media content that is obtained through editing processing.

For example, the privacy flag may be set by a system of the electronic device, or may be customized by a user. This is not limited in this application. In the creation (Creation) phase of the media asset, after the media content is obtained, a privacy flag setting interface may be displayed, and the user may set a privacy flag in the privacy flag interface. In the editing processing interface of the media asset, after the media content is obtained through editing processing, the privacy flag setting interface may also be displayed, and the user may set a privacy flag in the privacy flag interface.

In a possible manner, the privacy flag may directly indicate that the first information of the media content is public information or non-public information. For example, the privacy flag may be represented by using h (h is a positive integer) bits, where h may be a quantity of pieces of first information of the media content. In other words, one bit in the privacy flag corresponds to one piece of first information of the media content. In a possible manner, for one bit in the privacy flag, when a value of the bit is "1", it indicates that the first information of the corresponding media content is public information; and when the value of the bit is "0", it indicates that the first information of the corresponding media content is non-public information. In a possible manner, for one bit in the privacy flag, when a value of the bit is "1", it indicates that the first information of the corresponding media content is non-public information; and when the value of the bit is "0", it indicates that the first information of the corresponding media content is public information. This is not limited in this application.

FIG. 2B is a diagram of an example of a structure of metadata.

In FIG. 2B, if there are five pieces of initial information of the media content, a privacy flag (Privacy Flag) may be identified by using five bits, for example, "00011". A 1^{st} bit from left to right of the privacy flag indicates whether a generation location (Location) of the media content is non-public information or public information, and the 1^{st} bit is "0", that is, it indicates that a generation location (Location) of the media content is non-public information. A 2^{nd} bit from left to right indicates whether generation time (Time) of the media content is non-public information or public information, and the 2^{nd} bit is "0", that is, it indicates that the generation time (Time) of the media content is non-public information. A 3^{rd} bit from left to right indicates whether an author name (Creator) of the media content is non-public information or public information, and the 3^{rd} bit is "0", that is, it indicates that the author name (Creator) of the media content is non-public information. A 4^{th} bit from left to right indicates whether a hash value (Media Hash) of the media content is non-public information or public information, and the 4^{th} bit is "1", that is, it indicates that the hash value (Media Hash) of the media content is public information. A 5^{th} bit from left to right indicates whether a digital content identifier (Content ID) of the media content is non-public information or public information, and the 5^{th} bit is "1", that is, it indicates that the digital content identifier (Content ID) of the media content is public information.

It should be noted that FIG. 2B is merely an example of the metadata of the media content. A location of information included in the metadata of the media content in FIG. 2B is not limited in this application.

In a possible manner, the privacy flag may indirectly indicate that the first information of the media content is public information or non-public information. For example, the privacy flag may indicate a privacy level of the first information of the media content, and the privacy level indicates that the first information of the media content is public information or non-public information. Specifically, first information of media content whose privacy level is higher than the privacy level is public information, and first information of media content whose privacy level is lower than or equal to the privacy level is non-public information; or first information of media content whose privacy level is higher than the privacy level is non-public information, and first information of media content whose privacy level is lower than or equal to the privacy level is public information. In this application, an example in which the first information of the media content whose privacy level is higher than the privacy level is non-public information, and the first information of the media content whose privacy level is lower than or equal to the privacy level is public information is used for description.

For example, a level may be set for the first information of the media content in advance or in real time. For example, a privacy level of the hash value of the media content is L1, a privacy level of a generation manner of the media content and a privacy level of a digital content identifier of the media content are L2, a privacy level of generation time of the media content is L3, and a privacy level of a generation location of the media content, a privacy level of an author name of the media content, and a privacy level of information about a generation device of the media content are L4, where privacy levels corresponding to L1 to L4 are in ascending order.

FIG. 2C is a diagram of an example of a structure of metadata.

In FIG. 2C, a privacy flag (Privacy Flag) is L2. It is assumed that a privacy level of hard binding (Media Hash) of media content is L1, a privacy level of a digital content identifier (Content ID) of the media content is L2, a privacy level of generation time (Time) of the media content is L3, and a privacy level of a generation location (Location) of the media content and a privacy level of an author name (Creator) of the media content are L4. In this case, the privacy level of the generation location of the media content, the privacy level of the author name of the media content, and the generation time of the media content are non-public information; and the hard binding of the media content and the digital content identifier of the media content are public information.

It should be noted that FIG. 2C is merely an example of the metadata of the media content. A location of information included in the metadata of the media content in FIG. 2C is not limited in this application.

For ease of description below, the public information in the first information of the media content is referred to as second information, and the non-public information in the first information of the media content is referred to as third information.

In a possible manner, the metadata of the media content includes the second information, the third information, and the privacy flag. Structures of the metadata of the media content may be shown in FIG. 2B and FIG. 2C. Details are not described herein again. A visual representation of the metadata of the media content corresponding to FIG. 2B may be shown in FIG. 3A.

In a possible manner, the metadata of the media content includes the second information and the privacy flag, a metadata structure of the media content may be shown in FIG. 3B-1, and a visual representation of the metadata of the media content may be shown in FIG. 3B-2. In this way, after obtaining the media content and the metadata of the media content, another user cannot read the third information, so that the third information can be protected, and privacy information can be prevented from being leaked.

In a possible manner, the metadata of the media content includes the second information, fourth information (the fourth information may be information obtained through privacy protection processing on the third information), and the privacy flag. For example, the second information and the third information in the first information of the media content may be determined based on the privacy flag. Then, the fourth information is obtained through privacy protection processing on the third information. Then, the metadata of the media content may be generated based on the second information, the fourth information, and the privacy flag.

When the privacy flag indicates a privacy level of the first information of the media content, a privacy level of the second information is not higher than the privacy level indicated by the privacy flag, and a privacy level of the third information is higher than the privacy level indicated by the privacy flag. The second information may include a plurality of pieces of first information, and privacy levels of the plurality of pieces of second information are the same or different. For example, there are a plurality of pieces of third information, and privacy levels of the plurality of pieces of third information are the same or different.

FIG. 3C-1 and FIG. 3C-2 are a diagram of an example of metadata.

For example, a metadata structure of the media content may be shown in FIG. 3C-1, where "Location (Privacy)" represents a generation location of the media content obtained through privacy protection processing, "Time (Privacy)" represents generation time of the media content obtained through privacy protection processing, and "Creator (Privacy)" represents the author name of the media content obtained through privacy protection processing.

For example, the visual representation of the metadata of the media content may be shown in FIG. 3C-2, where "Creator: Privacy" indicates that the author name of the media content is information obtained through privacy protection processing on the author name of the media content, "Time: Privacy" indicates that generation time of the media content is information obtained through privacy protection processing on the generation time of the media content, and "Location: Privacy" indicates that the generation location of the media content is information obtained through privacy protection processing on the generation location of the media content.

In this way, after obtaining the media content and the metadata of the media content, another user can read only the fourth information obtained through privacy protection processing on the third information, and cannot read the third information, so that the third information can be protected, and privacy information can be prevented from being leaked.

For example, the metadata of the media content may further include at least one of the following: a claim or a claim signature, the claim is determined based on at least the first information, and the claim signature is a signature of the claim.

For example, the claim (Claim) may include at least one of the following: hard binding of the fourth information, hard binding of the second information, hard binding of the media content, or hard binding determined based on the second information, the fourth information, and hard binding of the media content. It should be understood that the claim may further include other information. This is not limited in this application.

For example, the claim may be signed according to a claim signature algorithm, to obtain the claim signature of the claim. It should be understood that the claim signature algorithm is not limited in this application.

FIG. 3D is a diagram of an example of a structure of metadata of media content.

Refer to FIG. 3D. For example, the metadata of the media content includes a privacy flag (Privacy Flag), an author name (Creator (Privacy)) of the media content obtained through privacy protection processing, a generation location (Location (Privacy)) of the media content obtained through privacy protection processing, generation time (Time (Privacy)) of the media content obtained through privacy protection processing, a hash value (Media Hash) of the media content, a digital content identifier (Content ID) of the media content, a claim (Claim), and a claim signature (Claim Signature).

It should be noted that FIG. 3A to FIG. 3D are merely examples of the metadata of the media content. A location of information included in the metadata of the media content in FIG. 3A to FIG. 3D is not limited in this application.

For example, in a creation phase of a media asset, the privacy flag, the second information, and the fourth information may be encapsulated to obtain encapsulated data (subsequently referred to as encapsulated data 1 (or referred to as mandatory assertion (Mandatory Assertion))). Then, the encapsulated data 1, the claim, and the claim signature are encapsulated, to obtain encapsulated data 2 (or referred to as a trust declaration (Trust Declaration)). Then, the encapsulated data 2 is encapsulated, to obtain encapsulated data 3 (or referred to as a trust record (Trust Record)). It should be noted that the second information in the encapsulated data 1 or the third information used to generate the fourth information in the encapsulated data 1 may include at least one of the following: generation time of the media content, an author name of the media content, a digital content identifier of the media content, a generation location of the media content, information about a generation device of the media content, a generation manner of the media content, a resolution of the media content, a size of the media content, a media type of the media content, hard binding of the media content, copyright information of the media content, and a training identifier of the media content.

FIG. 4A is a diagram of an example of a structure of metadata.

Refer to FIG. 4A. For example, a privacy flag (Privacy Flag), an author name (Creator (Privacy)) of the media content obtained through privacy protection processing, a generation location (Location (Privacy)) of the media content obtained through privacy protection processing, generation time (Time (Privacy)) of media content obtained through privacy protection processing, a hash value (Media Hash) of the media content, and a digital content identifier (Content ID) of the media content are encapsulated into a Mandatory Assertion, the Mandatory Assertion, a claim (Declaration Claim), and a claim signature (Claim Signature) are encapsulated into a Trust Declaration, the Trust Declaration is encapsulated into a Trust Record, and the Trust Record is encapsulated into metadata of media content.

It should be noted that a dashed box in FIG. 4A represents optional information, that is, the claim (Declaration Claim) and the claim signature (Claim Signature) are optional information.

For example, in an editing processing phase of a media asset, the privacy flag, second information, and fourth information may be encapsulated to obtain encapsulated data 4 (or referred to as assertion (Assertion)). It should be noted that the second information in the encapsulated data 4 or third information used to generate the fourth information in the encapsulated data 4 may include at least one of the following: editing operation information of the media content, editing time of the media content, an editing location of the media content, editing tool information of the media content, or information about an editing device of the media content. Then, the encapsulated data 4, the claim, and the claim signature are encapsulated, to obtain encapsulated data 5 (or referred to as a trust manifest (Trust Manifest)). Then, the encapsulated data 2 (generated in the creation phase of the media asset) and the encapsulated data 5 may be encapsulated to obtain encapsulated data 6 (or referred to as a trust record (Trust Record)).

FIG. 4B is a diagram of an example of a structure of metadata.

Refer to FIG. 4B. For example, a privacy flag (Privacy Flag), an editing time (Edit Time (Privacy)) obtained through privacy protection processing, an editing location (Edit Location (Privacy)) obtained through privacy protection processing, an editor name (Editor (Privacy)) obtained through privacy protection processing, a hash value (Media Hash 1) of the media content (a hash value of the media content obtained through editing processing), information (Device) about an editing device of the media content, and editing tool information (Tool) of the media content are encapsulated into an Assertion, the Assertion, and a claim (Claim) and the claim signature (Claim Signature) are encapsulated into Trust Manifests, and the Trust Manifests and Trust Declarations are encapsulated into Trust Records. For descriptions of the Trust Declaration, refer to FIG. 4A. Details are not described herein again.

It should be noted that a dashed box in FIG. 4B represents optional information, that is, the claim (Declaration Claim or Claim) and the claim signature (Claim Signature) are optional information.

It should be noted that FIG. 4A and FIG. 4B are merely examples of the metadata of the media content. A location of information included in the metadata of the media content in FIG. 4A and FIG. 4B is not limited in this application.

The following describes a privacy protection processing process.

In a possible manner, the privacy protection processing is encryption processing. Correspondingly, the fourth information may be ciphertext. In other words, the fourth information is ciphertext of the third information.

In a possible manner, one key may be used to perform the encryption processing on one piece of third information, to obtain one piece of fourth information.

In a possible manner, one key may be used to perform the encryption processing on information obtained by combining a plurality of pieces of third information, to obtain one piece of fourth information.

For example, keys used to perform the encrypting processing on different third information may be the same or may be different. This is not limited in this application.

For example, keys used to perform the encrypting processing on third information with different privacy levels may be the same or may be different. This is not limited in this application.

For example, keys used to perform the encrypting processing on third information with a same privacy level may be the same or may be different. This is not limited in this application.

FIG. 5A is a diagram of an example of an encryption processing process.

In FIG. 5A, three pieces of third information are x, y, and z, and three keys are K1, K2, and K3. Fourth information Enc (x, K1) may be obtained through encryption processing on x by using K1; fourth information Enc (y, K2) may be obtained through encryption processing on y by using K2; and fourth information Enc (z, K3) may be obtained through encryption processing on z by using K3.

It should be understood that FIG. 5A is merely an example of this application, and a specific key for the encrypting processing on a specific correlation in the third information is not limited in this application.

In a possible manner, when there are a plurality of keys used to perform the encrypting processing on the plurality of pieces of third information, the plurality of keys may be obtained by processing at least a master key according to a key derivation algorithm. For example, the plurality of keys may be obtained by processing at least the master key and a part of first information of media content according to a key derivation algorithm. It should be noted that an intersection set of the first information and the third information that are used to generate the key may be null, or may not be null. This is not limited in this application. For example, the first information used to generate the key may be hard binding of the media content.

FIG. 5B is a diagram of an example of an encryption processing process.

In FIG. 5B, three pieces of third information are x, y, and z. First, a master key (Master Key) K may be generated. Then, hard binding between the master key and the media content is processed according to a key derivation algorithm, to obtain three subkeys: K1, K2, and K3. Fourth information Enc (x, K1) may be obtained through encryption processing on x by using K1; fourth information Enc (y, K2) may be obtained through encryption processing on y by using K2; and fourth information Enc (z, K3) may be obtained through encryption processing on z by using K3.

It should be understood that FIG. 5B is merely an example of this application, and a specific key for the encrypting processing on a specific correlation in the third information is not limited in this application.

It should be understood that, when there are a plurality of keys used to perform the encrypting processing on the plurality of pieces of third information, the plurality of keys may alternatively be generated in another manner, for example, randomly generated. A manner of generating the plurality of keys is not limited in this application.

FIG. 5C is a diagram of an example of a structure of metadata.

Refer to FIG. 5C. For example, the metadata of the media content may include a privacy flag (Privacy Flag), an encrypted generation location (Enc (Location, K1)), encrypted generation time (Enc (Time, K2)), an encrypted author name (Enc (Creator, K1)), hard binding (Media Hash) of the media content, and a digital content identifier (Content ID) of the media content.

It should be noted that FIG. 5A to FIG. 5C are merely examples of the metadata of the media content. A location of information included in the metadata of the media content in FIG. 5A to FIG. 5C is not limited in this application.

In a possible manner, privacy protection processing is hard binding processing. In this application, an example in which the hard binding processing is hash calculation is used for description. Correspondingly, the fourth information is a hash value of third information.

In a possible manner, hash calculation may be performed on one piece of third information by using at least one random number, to obtain one piece of fourth information. Specifically, the at least one random number and the one piece of third information may be connected. Then, hash calculation is performed, according to a hash algorithm, on information obtained after the at least one random number and the one piece of third information are connected, to obtain the one piece of fourth information.

In a possible manner, hash calculation may be performed, by using at least one random number, on information obtained by combining a plurality of pieces of third information, to obtain one piece of fourth information. Specifically, the at least one random number and the plurality of pieces of third information may be connected. Then, hash calculation is performed, according to a hash algorithm, on information obtained after the at least one random number and the plurality of pieces of third information are connected, to obtain the one piece of fourth information.

For example, random numbers for performing hash calculation on different third information may be the same or may be different. This is not limited in this application.

For example, random numbers for performing hash calculation on third information with different privacy levels may be the same or may be different. This is not limited in this application.

For example, random numbers for performing hash calculation on third information with a same privacy level may be the same or may be different. This is not limited in this application.

FIG. 5D is a diagram of an example of a hash calculation process.

In FIG. 5D, three pieces of third information are x, y, and z, and three randomly generated random numbers are r, s, and t. Hash calculation may be performed, according to a hash algorithm, on connected r and x, to obtain fourth information hash (x ∥ r); hash calculation may be performed, according to a hash algorithm, on connected s and y, to obtain fourth information hash (y ∥ s); and hash calculation may be performed, according to a hash algorithm, on the connected t and z, to obtain the fourth information hash (z ∥ t).

It should be understood that FIG. 5D is merely an example of this application, and a specific random number and a specific correlation in the third information that are used for hash calculation are not limited in this application.

FIG. 5E is a diagram of an example of a structure of metadata.

Refer to FIG. 5E. For example, metadata of media content may include a privacy flag (Privacy Flag), a hash value (hash (Location ∥ r)) of a generation location of the media content, a hash value (hash (Time ∥ s)) of generation time of the media content, a hash value (hash (Creator ∥ t)) of an author name of the media content, hard binding (Media Hash) of the media content, and a digital content identifier (Content ID) of the media content.

It should be noted that a random number may not need to be generated. In a possible manner, hash calculation may be performed on only one piece of third information, to obtain one piece of fourth information. In a possible manner, hash calculation may be performed only on the plurality of pieces of third information, to obtain one piece of fourth information.

It should be noted that FIG. 5E is merely an example of the metadata of the media content. A location of information included in the metadata of the media content in FIG. 5E is not limited in this application.

It should be noted that first information of the media content may include a type of the first information and a value of the first information (that is, a value of the type). For example, a generation location of the media content is "address: ** province", the type of the first information is "address", and the value of the first information is "** province". Performing privacy protection processing based on the third information means performing privacy protection processing based on a value of the third information, that is, performing privacy protection processing on the value of the third information, to obtain second information.

For example, the Creator (Privacy) in the foregoing embodiment may refer to a value of an author name of the media content obtained through privacy protection processing; the Location (Privacy) may be a value of a generation location of the media content obtained through privacy protection processing; the Time (Privacy) may be a value of generation time of the media content obtained through privacy protection processing; the Content ID may be a value of a digital content identifier of the media content; and the Privacy Flag (L2) in the foregoing embodiment indicates that a value of the privacy flag is L2.

In a possible manner, the metadata of the media content may further include a type of the second information and/or a type of the third information.

FIG. 5F is a diagram of an example of a structure of metadata.

Refer to FIG. 5F. For example, metadata of media content includes a privacy flag (Privacy Flag) and a value (Value_Privacy Flag (L2)) of the privacy flag, a value (Value_Creator (Privacy)) of an author name of the media content obtained through privacy protection processing and an author name (Creator) of the media content, a value (Value_Location (Privacy)) of a generation location of the media content obtained through privacy protection processing and a generation location (Location) of the media content, generation time (Value_Time (Privacy)) of the media content obtained through privacy protection processing and generation time (Time) of the media content, hard binding (Media Hash) of the media content, and a value (Value_Content ID) of a digital content identifier of the media content and a digital content identifier (Content ID) of the media content.

It should be understood that the Value_Privacy Flag (L2) in FIG. 5F is equivalent to the Privacy Flag (L2) in the foregoing embodiment, the Value_Creator (Privacy) in FIG. 5F is equivalent to the Creator (Privacy) in the foregoing embodiment, the Value_Location (Privacy) in FIG. 5F is equivalent to the Location (Privacy) in the foregoing embodiment, the Value_Time (Privacy) in FIG. 5F is equivalent to the Time (Privacy) in the foregoing embodiment, and the Value_Content ID in FIG. 5F is equivalent to the Content ID in the foregoing embodiment.

FIG. 6 is a diagram of an example of a metadata generation apparatus. The metadata generation apparatus may be configured to perform the method in the foregoing embodiments. Therefore, for beneficial effect that can be achieved by the metadata generation apparatus, refer to beneficial effect in the corresponding method provided above. Details are not described herein again.

Refer to FIG. 6. For example, the metadata generation apparatus may include:
an obtaining module 601, configured to obtain media content; and
a generation module 602, configured to generate metadata of the media content, where the metadata of the media content includes first information of the media content and a privacy flag, and the privacy flag indicates that the first information of the media content is public information or non-public information.

For example, the privacy flag indicates a privacy level of the first information of the media content, and the privacy level indicates that the first information of the media content is public information or non-public information.

For example, that the privacy level indicates that first information of the media content is public information or non-public information includes: First information of media content whose privacy level is higher than the privacy level is public information, and first information of media content whose privacy level is lower than or equal to the privacy level is non-public information; or first information of media content whose privacy level is higher than the privacy level is non-public information, and first information of media content whose privacy level is lower than or equal to the privacy level is public information.

For example, the privacy flag indicates that a part or all of the first information is public information or non-public information.

For example, the first information of the media content includes second information, and the privacy flag specifically indicates that the second information is public information.

For example, the metadata of the media content further includes fourth information, the fourth information is obtained through privacy protection processing based on third information, and the privacy flag further indicates that the third information is non-public information.

For example, a privacy level of the second information is not higher than a privacy level indicated by the privacy flag.

For example, there are a plurality of pieces of second information, and privacy levels of the plurality of pieces of second information are the same or different.

For example, a privacy level of the third information is higher than the privacy level indicated by the privacy flag.

For example, the privacy protection processing includes at least one of encryption processing or hard binding processing.

For example, there are a plurality of pieces of third information, and the fourth information is obtained through the encryption processing on the plurality of pieces of third information by using a plurality of keys. One key is used to perform the encryption processing on at least one piece of third information.

For example, the plurality of keys are obtained by processing at least a master key according to a key derivation algorithm.

For example, there are a plurality of pieces of third information, and the fourth information is obtained through the hard binding processing based on a plurality of random numbers and the plurality of pieces of third information. At least one random number is used to perform the hard binding processing with at least one piece of third information.

For example, there are the plurality of pieces of third information, there are a plurality of pieces of fourth information, and one piece of fourth information is obtained through the privacy protection processing based on the at least one piece of third information.

For example, the metadata of the media content further includes at least one of the following: a claim or a claim signature, the claim is determined based on at least the first information of the media content, and the claim signature is a signature of the claim.

For example, the first information of the media content includes at least one of the following: generation time of the media content, an author name of the media content, a digital content identifier of the media content, a generation location of the media content, information about a media content generation device of the media content, a generation manner of the media content, a resolution of the media content, a size of the media content, a media type of the media content, hard binding of the media content, copyright information of the media content, a training identifier of the media content, editing operation information of the media content, editing time of the media content, an editing location of the media content, editing tool information of the media content, or information about an editing device of the media content.

For example, the obtaining module 601 is further configured to obtain first information of the media content and the privacy flag.

The metadata generation apparatus further includes an information determining module and an encapsulation module.

The information determining module is configured to determine the second information in the first information of the media content based on the privacy flag.

The encapsulation module is configured to encapsulate at least the second information and the privacy flag, to obtain first encapsulated data.

For example, the information determining module is further configured to determine the second information and third information in the first information of the media content based on the privacy flag; and the metadata generation apparatus further includes a privacy protection module, configured to perform the privacy protection processing on the third information, to obtain the fourth information.

The encapsulation module is further configured to encapsulate at least the second information, the privacy flag, and the fourth information, to obtain second encapsulated data.

FIG. 7 is a diagram of an example of a media asset display apparatus. The media asset display apparatus may be configured to perform the method in the foregoing embodiments. Therefore, for beneficial effect that can be achieved by the media asset display apparatus, refer to beneficial effect in the corresponding method provided above. Details are not described herein again.

Refer to FIG. 7. For example, the media asset display apparatus may include:
a receiving module 701, configured to receive an operation for a media asset, where the media asset includes media content and metadata of the media content, the metadata of the media content includes first information of the media content and a privacy flag, and the privacy flag indicates that the first information of the media content is public information or non-public information; and
a display module 702, configured to display public information in the first information of the media content in response to the operation for the media asset.

For example, the display module 702 is configured to further display the privacy flag in response to the operation for the media asset.

For example, the metadata of the media content further includes fourth information, the fourth information is obtained through privacy protection processing based on third information, and the third information is non-public information in the first information of the media content; and the display module 702 is configured to further display the fourth information in response to the operation for the media asset.

For example, the metadata of the media content further includes fourth information, the fourth information includes information obtained through encryption processing on third information by using a first key, and the third information is non-public information in the first information of the media content. The display module 702 is configured to: when the electronic device holds a plurality of first keys, further display, in response to the operation for the media asset, the third information obtained through decryption processing on the fourth information by using the first keys.

For example, the privacy flag indicates a privacy level of the first information of the media content, and the privacy level indicates that the first information of the media content is public information or non-public information.

For example, the privacy protection processing includes at least one of encryption processing or hard binding processing.

In an example, FIG. 8 is a block diagram of an apparatus 800 according to an embodiment of this application. The apparatus 800 may include a processor 801 and a transceiver/transceiver pin 802, and optionally, further include a memory 803.

Components of the apparatus 800 are coupled together through a bus 804. In addition to a data bus, the bus 804 further includes a power bus, a control bus, and a status signal bus. However, for clear description, various types of buses in the figure are marked as the bus 804.

Optionally, the memory 803 may be configured to store instructions in the foregoing method embodiments. The processor 801 may be configured to: execute the instructions in the memory 803, control a receiving pin to receive a signal, and control a sending pin to send a signal.

The apparatus 800 may be the electronic device in the method embodiments or a chip of the electronic device.

All related content of the steps in the foregoing method embodiments may be cited in function descriptions of the corresponding functional modules. Details are not described herein again.

An embodiment of this application further provides a chip, including one or more interface circuits and one or more processors. The one or more processors receive or send data via the one or more interface circuits. When the one or more processors execute computer instructions, the electronic device is enabled to perform the foregoing related method steps to implement the metadata generation method in the foregoing embodiments. The interface circuit is the transceiver/transceiver pin 802.

An embodiment further provides a computer-readable storage medium. The computer-readable storage medium stores computer instructions. When the computer instructions are run on an electronic device, the electronic device is enabled to perform the foregoing related method steps to implement the metadata generation method in the foregoing embodiments.

An embodiment further provides a computer program product. The computer program product includes computer instructions. When the computer instructions are executed by a computer or a processor, the computer is enabled to perform the foregoing related steps to implement the metadata generation method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the metadata generation method in the foregoing method embodiments.

The electronic device, the computer-readable storage medium, the computer program product, or the chip provided in embodiments is configured to perform the corresponding method provided above. Therefore, for beneficial effect that can be achieved, refer to the beneficial effect of the corresponding method provided above. Details are not described herein again.

Based on the foregoing descriptions of the implementations, a person skilled in the art may understand that for the purpose of convenient and brief description, division into the foregoing functional modules is only used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, division into the modules or units is merely logical function division. There may be another division manner in actual implementation. For example, a plurality of units or components may be combined or may be integrated into another apparatus, or some features may be ignored or not be performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

Any content of embodiments of this application and any content of a same embodiment may be freely combined. Any combination of the foregoing content shall fall within the scope of this application.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the method described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

Methods or algorithm steps described in combination with the content disclosed in embodiments of this application may be implemented by hardware, or may be implemented by a processor by executing a software instruction. The software instruction may include a corresponding software module. The software module may be stored in a random access memory (Random Access Memory, RAM), a flash memory, a read-only memory (Read Only Memory, ROM), an erasable programmable read-only memory (Erasable Programmable ROM, EPROM), an electrically erasable programmable read-only memory (Electrically EPROM, EEPROM), a register, a hard disk drive, a removable hard disk drive, a compact disc read-only memory (CD-ROM), or any other form of storage medium well-known in the art. For example, the storage medium is coupled to the processor, so that the processor can read information from the storage medium and write information to the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another place. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make many modifications without departing from the purposes of this application and the protection scope of the claims, and all the modifications shall fall within the protection of this application.

## Claims

1. A metadata generation method, wherein the method comprises:
obtaining media content; and
generating metadata of the media content, wherein the metadata of the media content comprises first information of the media content and a privacy flag, and the privacy flag indicates that the first information of the media content is public information or non-public information.

2. The method according to claim 1, wherein
the privacy flag indicates a privacy level of the first information of the media content, and the privacy level indicates that the first information of the media content is public information or non-public information.

3. The method according to claim 2, wherein that the privacy level indicates that the first information of the media content is public information or non-public information comprises:
first information of media content whose privacy level is higher than the privacy level is public information, and first information of media content whose privacy level is lower than or equal to the privacy level is non-public information; or
first information of media content whose privacy level is higher than the privacy level is non-public information, and first information of media content whose privacy level is lower than or equal to the privacy level is public information.

4. The method according to any one of claims 1 to 3, wherein
the privacy flag indicates that a part or all of the first information is public information or non-public information.

5. The method according to any one of claims 1 to 4, wherein
the first information of the media content comprises second information, and the privacy flag specifically indicates that the second information is public information.

6. The method according to any one of claims 1 to 5, wherein
the metadata of the media content further comprises fourth information, the fourth information is obtained through privacy protection processing based on third information, and the privacy flag further indicates that the third information is non-public information.

7. The method according to any one of claims 2 to 6, wherein there are a plurality of pieces of second information, and privacy levels of the plurality of pieces of second information are the same or different.

8. The method according to claim 3, wherein
the privacy protection processing comprises at least one of encryption processing or hard binding processing.

9. The method according to claim 6 or 8, wherein there are a plurality of pieces of third information, and
the fourth information is obtained through the encryption processing on the plurality of pieces of third information by using a plurality of keys, wherein one key is used to perform the encryption processing on at least one piece of third information.

10. The method according to claim 9, wherein
the plurality of keys are obtained by processing at least a master key according to a key derivation algorithm.

11. The method according to claim 6 or 8, wherein there are a plurality of pieces of third information, and
the fourth information is obtained through the hard binding processing based on a plurality of random numbers and the plurality of pieces of third information, wherein at least one random number is used to perform the hard binding processing with at least one piece of third information.

12. The method according to claim 6, 8, 9, 10, or 11, wherein there are the plurality of pieces of third information, there are a plurality of pieces of fourth information, and one piece of fourth information is obtained through the privacy protection processing based on the at least one piece of third information.

13. The method of any one of claims 1 to 12, wherein the metadata of the media content further comprises at least one of the following: a claim or a claim signature, the claim is determined based on at least the first information of the media content, and the claim signature is a signature of the claim.

14. The method according to any one of claims 1 to 13, wherein
the first information of the media content comprises at least one of the following: generation time of the media content, an author name of the media content, a digital content identifier of the media content, a generation location of the media content, information about a media content generation device of the media content, a generation manner of the media content, a resolution of the media content, a size of the media content, a media type of the media content, hard binding of the media content, copyright information of the media content, a training identifier of the media content, editing operation information of the media content, editing time of the media content, an editing location of the media content, editing tool information of the media content, or information about an editing device of the media content.

15. The method according to any one of claims 1 to 14, wherein the method further comprises:
obtaining the first information of the media content and the privacy flag;
determining the second information in the first information of the media content based on the privacy flag; and
encapsulating at least the second information and the privacy flag, to obtain first encapsulated data.

16. The method according to any one of claims 1 to 14, wherein the method further comprises:
obtaining the first information of the media content and the privacy flag;
determining the second information and third information in the first information of the media content based on the privacy flag;
performing the privacy protection processing on the third information, to obtain the fourth information; and
encapsulating at least the second information, the privacy flag, and the fourth information, to obtain second encapsulated data.

17. A media asset display method, applied to an electronic device having a display, wherein the method comprises:
obtaining an operation for a media asset, wherein the media asset comprises media content and metadata of the media content, the metadata of the media content comprises first information of the media content and a privacy flag, and the privacy flag indicates that the first information of the media content is public information or non-public information; and
displaying public information in the first information of the media content in response to the operation for the media asset.

18. The method according to claim 17, wherein the method comprises:
further displaying the privacy flag in response to the operation for the media asset.

19. The method according to claim 17 or 18, wherein the metadata of the media content further comprises fourth information, the fourth information is obtained through privacy protection processing based on third information, and the third information is non-public information in the first information of the media content; and the method comprises:
further displaying the fourth information in response to the operation for the media asset.

20. The method according to claim 17 or 18, wherein the metadata of the media content further comprises fourth information, the fourth information comprises information obtained through encryption processing on third information by using a first key, and the third information is non-public information in the first information of the media content; and the method comprises:
when the electronic device holds the first key, further displaying, in response to the operation for the media asset, the third information obtained through decryption processing on the fourth information by using the first key.

21. The method according to any one of claims 17 to 20, wherein
the privacy flag indicates a privacy level of the first information of the media content, and the privacy level indicates that the first information of the media content is public information or non-public information.

22. The method according to claim 19, wherein
the privacy protection processing comprises at least one of encryption processing or hard binding processing.

23. A metadata generation apparatus, wherein the apparatus comprises:
an obtaining module, configured to obtain media content; and
a generation module, configured to generate metadata of the media content, wherein the metadata of the media content comprises first information of the media content and a privacy flag, and the privacy flag indicates that the first information of the media content is public information or non-public information.

24. The apparatus according to claim 23, wherein
the privacy flag indicates a privacy level of the first information of the media content, and the privacy level indicates that the first information of the media content is public information or non-public information.

25. The apparatus according to claim 23 or 24, wherein
the first information of the media content comprises second information, and the privacy flag specifically indicates that the second information is public information.

26. The apparatus according to any one of claims 23 to 25, wherein
the metadata of the media content further comprises fourth information, the fourth information is obtained through privacy protection processing based on third information, and the privacy flag further indicates that the third information is non-public information.

27. A media asset display apparatus, wherein the apparatus comprises:
a receiving module, configured to receive an operation for a media asset, wherein the media asset comprises media content and metadata of the media content, the metadata of the media content comprises first information of the media content and a privacy flag, and the privacy flag indicates that the first information of the media content is public information or non-public information; and
a display module, configured to display public information in the first information of the media content in response to the operation for the media asset.

28. The apparatus according to claim 27, wherein
the display module is configured to further display the privacy flag in response to the operation for the media asset.

29. The apparatus according to claim 27 or 28, wherein the metadata of the media content further comprises fourth information, the fourth information is obtained through privacy protection processing based on third information, and the third information is non-public information in the first information of the media content; and
the display module is configured to further display the fourth information in response to the operation for the media asset.

30. The apparatus according to claim 27 or 28, wherein the metadata of the media content further comprises fourth information, the fourth information comprises information obtained through encryption processing on third information by using a first key, and the third information is non-public information in the first information of the media content; and
the display module is configured to: when the electronic device holds the first key, further display, in response to the operation for the media asset, the third information obtained through decryption processing on the fourth information by using the first key.

31. An electronic device, comprising:
a memory and a processor, wherein the memory is coupled to the processor; and
the memory stores program instructions, and when the program instructions are executed by the processor, the electronic device is enabled to perform the metadata generation method according to any one of claims 1 to 16.

32. An electronic device, comprising:
a memory and a processor, wherein the memory is coupled to the processor; and
the memory stores program instructions, and when the program instructions are executed by the processor, the electronic device is enabled to perform the media asset display method according to any one of claims 17 to 22.

33. A chip, comprising one or more interface circuits and one or more processors, wherein the one or more processors receive or send data through the one or more interface circuits, and when the one or more processors execute computer instructions, the electronic device is enabled to perform the method according to any one of claims 1 to 22.

34. A computer-readable storage medium, wherein the computer-readable storage medium stores a computer program, and when the computer program is run on a computer or a processor, the computer or the processor is enabled to perform the method according to any one of claims 1 to 22.

35. A computer program product, wherein the computer program product comprises computer instructions, and when the computer instructions are executed by a computer or a processor, the steps of the method according to any one of claims 1 to 22 are performed.
